# EUROPEAN PATENT APPLICATION

(11) **EP 3 096 274 A2**
(43) Date of publication of application: **23.11.2016**
(21) Application number: 15179572.1
(22) Date of filing: 04.03.2004
(51) Int. Cl.: G06Q 20/32

(54) **SECURE TRANSACTION SYSTEM**

(30) Priority: 06.03.2003 GB 0305062; 07.07.2003 GB 0315864; 02.09.2003 GB 0320564
(62) Divisional of application: 04717158.2
(71) Applicant: Williams-King, Simone, London WC2B 5RZ (GB)
(72) Inventor: QAJAR, M. Rashid, Epsom, Surrey KT17 4BW (GB); SIMPSON, Christopher, Epsom, Surrey KT17 4BW (GB); LEEBETTER, Christopher, Harston, Cambridgeshire CB2 5GG (GB); POPHAM, Michael, Epsom, Surrey KT17 4BW (GB)
(74) Representative: Roberts, Gwilym Vaughan

(57) **Abstract**

An electronic transaction system and method are described for performing a transaction between a merchant who provides goods or services and a user. In an embodiment, the transaction system includes a merchant terminal which receives user identification data for a user associated with the transaction and transmits an authorisation request for the transaction. A transaction server receives the authorisation request and stores user account data associated with the user identification data. The user account data includes a mobile communications device number associated with the user so that the transaction server can send a communication to the user's mobile communications device requesting that the user authorise the transaction. Once authorised by the user, the transaction server sends an authorisation signal back to the merchant terminal.

## Description

The present invention relates to a secure transaction system and in particular, to a card transaction system in which the card owner's validation is required to complete a card transaction.

The use of credit and debit cards is a popular and efficient way of making a purchase and is widely used to carry out purchases over, for example, the Internet, the telephone and the counter in a shop. However, due to the popularity and efficiency of credit and debit cards, existing card transaction systems suffer from a number of security drawbacks, in particular the problem of fraudulent use which is often difficult to detect and difficult to prevent. For example, if a credit or debit card is lost or stolen, a third party who obtains the credit or debit card may easily use the card details to carry out his or her own purchases until the credit or debit limits are exceeded.

Credit or debit card details may also become available for fraudulent use, for example, from over the counter transactions. In such situations, typically a receipt and a carbon copy is printed which includes the transaction details and the credit or debit card details. If a third party obtains such a receipt, the card details printed on the receipt are then available for fraudulent use, for example, to make a transaction over the telephone or the Internet. Telephone and Internet transactions typically only require basic card details such as the card number and the name on the card and these card details are readily available from a typical receipt.

As another example, during transactions over the Internet, card details transmitted to an on-line merchant may be intercepted by a fraudster. The stolen card details may then be fraudulently used as described above.

When credit or debit card details are stolen for fraudulent use, the card owner may not become aware of such use until he receives his or her next credit card bill or debit card statement, or when the credit or debit card is declined because the credit or debit limit has been exceeded. This may be an inconvenience when the card owner wishes to make a purchase using the credit or debit card and is unable to do so because the card is declined. The card owner then has to identify the fraudulent transactions or request a new credit or debit card.

The present invention aims to provide an alternative card transaction system. According to one aspect, there is provided an electronic transaction system comprising:
a merchant terminal associated with a merchant who provides goods or services to a user and comprising:
   i) first input means for receiving details of a transaction;
   ii) second input means for receiving user identification data for a user associated with the transaction; and
   iii) means for transmitting an authorisation request for the transaction, the request including said transaction data and said user identification data; and
a transaction server operable to receive the authorisation request and comprising:
   i) means for storing, for each user, one or more mobile communications device numbers associated with user identification data;
   ii) means for using the user identification data in the received authorisation request to retrieve a stored mobile communications device number for the user associated with the transaction;
   iii) means for transmitting a communication for authorisation of the transaction to the user's mobile communications device using the retrieved mobile communications device number;
   iv) means for receiving authorisation for the transaction from the user; and
   v) means for transmitting an authorisation signal for the transaction.

Preferred embodiments of the present invention will now be described by way of example only with reference to the accompanying drawings, in which:
Figure 1 is a block diagram showing the main components of an electronic transaction system embodying the present invention;
Figure 2a is a block diagram showing the main functional elements of an Electronic Point of Sale Terminal shown in Figure 1;
Figure 2b is a block diagram illustrating the main elements of an authorisation request generated by the Electronic Point of Sale Terminal shown in Figure 2a;
Figure 3 is a block diagram showing the main functional elements of a Merchant Acquirer Server shown in Figure 1;
Figure 4 is a block diagram showing the main functional elements of a Mobile Telephone Transaction Card Issuer Server shown in Figure 1;
Figure 5, which comprises Figures 5a and 5b, illustrates the data structure used to store user account details in the Mobile Telephone Transaction Card Issuer Server shown in Figure 4;
Figure 6 is a block diagram showing the main functional elements of a mobile telephone shown in Figure 1;
Figure 7 is a block diagram showing the main functional elements of the mobile telephone shown in Figure 6 when configured to perform the instructions of a mobile transaction authentication module;
Figure 8, which comprises Figures 8a to 8m, is a flow diagram illustrating the main processing steps performed by the components in Figure 1 in processing a transaction;
Figure 9, which comprises Figures 9a to 9e, illustrates a sequence of display screens of the mobile telephone during the transaction processing illustrated in Figure 8;
Figure 10 illustrates an Internet enabled computing environment which enables users to set up and manage their mobile transaction user account; and
Figure 11, which comprises Figures 11a to 11f, illustrates a sequence of screens displayed to the user when setting up their user account in the Mobile Telephone Transaction Card Issuer Server shown in Figure 11.

### Overview

An overview of the secure transaction system will now be given for a transaction involving a user purchasing a product from a merchant at an electronic point of sale terminal.

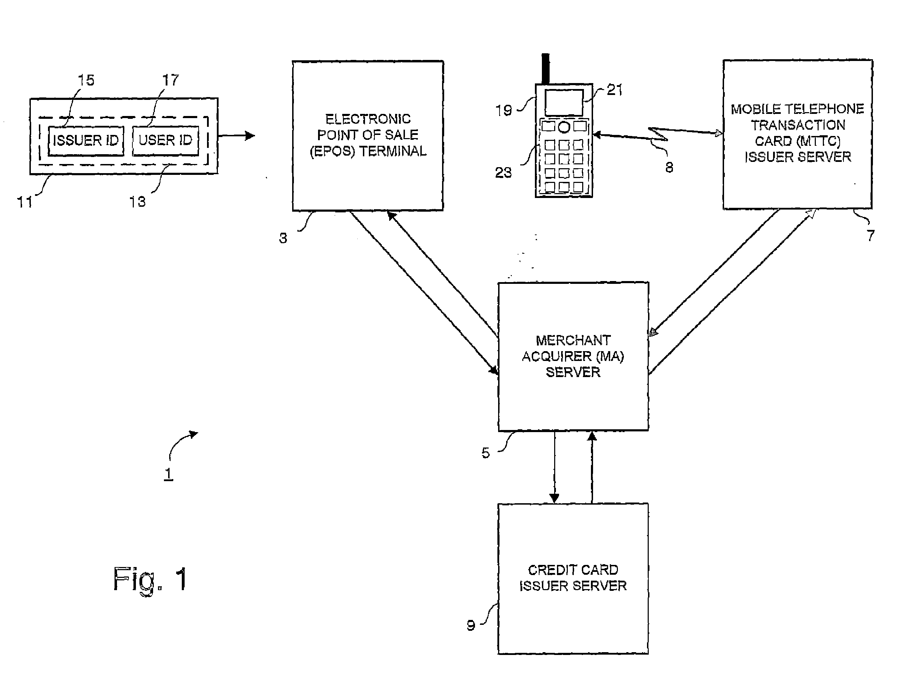

Referring to Figure 1, the electronic transaction system 1 of the present embodiment comprises an Electronic Point of Sale (EPOS) Terminal 3, a Merchant Acquirer (MA) Server 5, a Mobile Telephone Transaction Card (MTTC) Issuer Server 7 and a Credit Card Issuer Server 9 which communicate electronically with one another. Typically the terminals and servers communicate with one another via a direct dial telephone link. The MTTC Issuer Server 7 also communicates with the user's mobile telephone 19 via mobile telephone network 8.

After the merchant has entered the transaction details for the product into the EPOS terminal 3, the user provides their Mobile Telephone Transaction Card (MTTC) 11 (which is issued by the MTTC Issuer Server 7) to the merchant. The MTTC 11 is not, however, a credit or debit card. It is a "valueless" card in that it cannot be used directly to pay for the goods or services other than through the payment system to be described below.

The merchant swipes the MTTC 11 through a card reader (not shown) in the EPOS terminal 3 to read the card details 13 (including a card issuer identification number 15 and a user identification number 17) from a magnetic stripe or electronic chip on the card 11. The EPOS terminal 3 then sends an authorisation request (including the card details 13 and the transaction details) to the MA Server 5, in the usual way. The MA Server 5 uses the card details in the received authorisation request in the usual way to direct the request to the MTTC Issuer Server 7. The MTTC Issuer Server 7 then uses the card details to retrieve the user's mobile telephone number which it has stored in memory (not shown). The MTTC issuer server 7 then initiates a communication to the user's mobile telephone so that the user can authorise the specific transaction.

Once the user's authorisation has been received by the MTTC Issuer Server 7, it generates an authorisation request for a "shadow transaction" (using the original transaction details and real credit card or debit card details that are also stored in the MTTC Issuer Server 7) which it transmits back to the MA Server 5. The MA Server 5 processes the received shadow authorisation request just like any other authorisation request and passes the shadow authorisation request to the appropriate card issuer server 9 (defined by the real credit/debit card details). Once the credit card issuer server 9 has authorised the shadow authorisation request in the usual way, the MA Server 5 returns the appropriate authorisation code back to the MTTC Issuer Server 7 which then authorises the original authorisation request by sending an appropriate authorisation request back to the MA Server 5. The MA Server 5 then forwards the authorisation code back to the EPOS terminal 3, which then prints a receipt including the transaction details to complete the authorised transaction.

In this way, before any purchases are debited from the user's credit or debit card, the user is contacted on their mobile telephone 19 so that they can personally authorise the transaction. Further, since the card that is given to the merchant is not a real credit or debit card, but is a "valueless" card, even if the merchant is fraudulent and copies the card details, he cannot use them outside the transaction system described above.

An overview of the mobile telephone transaction processing system has been given above. A more detailed description of the components of the system will now be given followed by a detailed description of the operation of the transaction system during a transaction process.

### Electronic Point of Sale Terminal

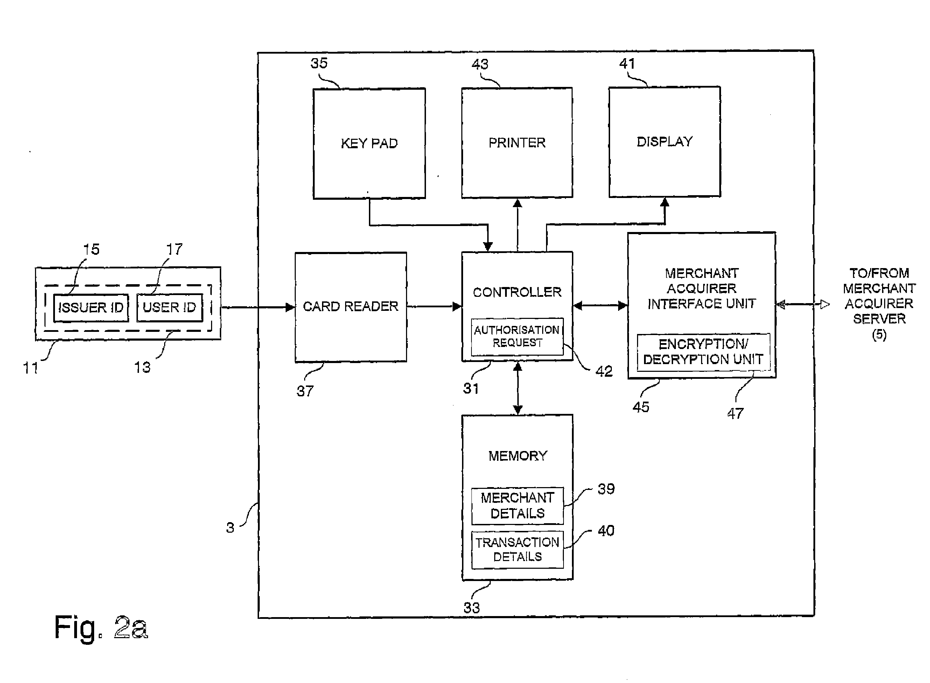

Figure 2a shows the functional elements of the Electronic Point of Sale (EPOS) Terminal 3 used in this embodiment. As shown the EPOS Terminal 3 includes a controller 31 which carries out processing operations in accordance with instructions stored in a memory 33 and in response to input received from the keypad 35 and the card reader 37. The memory 33 also stores merchant details 39 for identifying the EPOS Terminal 3 and the associated merchant. The EPOS Terminal 3 also includes a display 41, a printer 43 and a Merchant Acquirer Interface Unit 45 for transmitting data to and receiving data from the MA Server 5.

As shown, the Merchant Acquirer Interface Unit 45 includes an encryption/decryption unit 47 for encrypting transaction authorisation requests which are to be transmitted to the MA Server 5, and for decrypting transaction authorisation status messages received back from the MA Server 5.

In this embodiment, to initiate a purchase transaction operation, the merchant enters details of the transaction into the EPOS Terminal 3 via the keypad 35, such as the price and quantity of the goods. Alternatively, the EPOS Terminal 3 may include other means for entering details about the goods being purchased, for example, using a bar code scanner or a touch screen keyboard (not shown) etc.

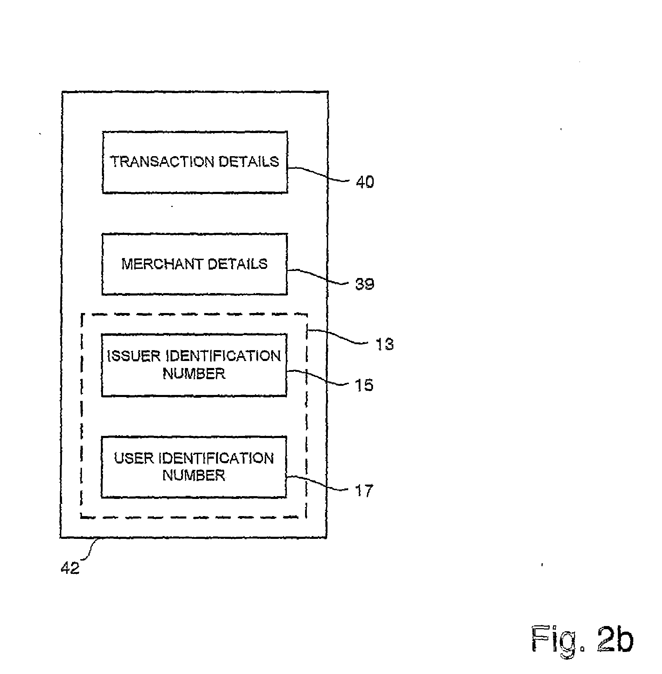

In response, the controller 31 stores the received transaction details 40 (including a calculated total cost of the transaction) in the memory 33 and prompts the merchant via the display 41 to insert the user's Mobile Telephone Transaction Card (MTTC) 11 into the card reader 37. The card reader 37 then reads the card details 13 (including the card issuer identification number 15 and a user identification number 17) from the card 11. The read card details 13 are then passed to the controller 31, which generates a transaction authorisation request 42, which is shown in more detail in Figure 2b. As shown, the generated authorisation request 42 includes the entered transaction details 40, the merchant details 39 stored in the memory 33, and the read card details 13 (which include the issuer identification number 15 and the user identification number 17). The controller 31 then passes the generated authorisation request 42 to the Merchant Acquirer Interface Unit 45, which encrypts the authorisation request 42 and transmits the encrypted request to the MA Server 5.

Once the EPOS terminal 3 receives a transaction failed or transaction authorised message from the MA Server 5, the message is decrypted by the Merchant Acquirer Interface Unit 45 and passed back to the controller 31 which displays the message to the merchant on the display 41. If the received message is a transaction authorisation message then the controller 31 outputs a receipt for the user on the printer 43. In this embodiment, the receipt includes the transaction details 40 and the authorisation code received from the MTTC Issuer Server 7.

### Merchant Acquirer Server

As will be apparent from the above overview, the Merchant Acquirer (MA) Server 5 effectively functions as a router which routes authorisation requests received from different merchants to the appropriate card issuer server and then, once authorisation has been given or is declined, returns the appropriate authorisation message back to the appropriate merchant.

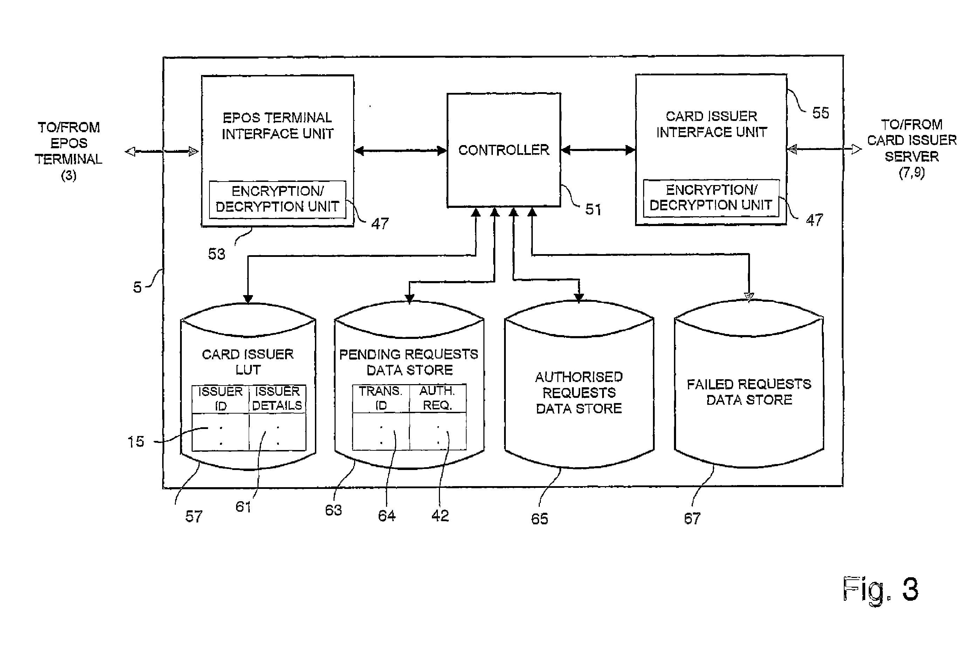

Figure 3 shows the functional elements of the MA Server 5 used in this embodiment. As shown, the MA Server 5 includes a controller 51 which carries out processing operations in response to authorisation requests received from the EPOS terminals via the EPOS Terminal Interface Unit 53 or from the card issuer servers via the Card Issuer Interface Unit 55. The EPOS Terminal Interface Unit 53 and the Card Issuer Interface Unit 55 also include encryption/decryption units 47 for encrypting authorisation requests to be transmitted and for decrypting received authorisation requests and transaction authorisation or failed messages. The MA Server 5 also includes a Card Issuer Look-up Table (LUT) 57 which stores a list of issuer identification numbers 59 of known Card Issuers along with the corresponding Card Issuer details 61.

As described above with reference to Figure 1, the MA Server 5 receives transaction authorisation requests from the EPOS Terminal 3 and receives shadow transaction authorisation requests from the MTTC Issuer Server 7. In response to receiving an authorisation request 42, the controller 51 stores the received authorisation request 42 together with a unique MA transaction ID 64 in the pending requests data store 63. The unique MA transaction ID 64 is also appended to the authorisation request 42 and is used later to identify the stored authorisation request 42 when a subsequent transaction authorisation or failure message is received having the appended MA transaction ID 64.

The controller 51 also extracts the card issuer identification number 15 from the received card details 13 and locates the card issuer identification number 15 in the Card Issuer LUT 57. The controller 51 then retrieves the corresponding card issuer details 61 from the Card Issuer LUT 57 and passes them together with the authorisation request 42 (with the appended MA transaction ID 64) to the Card Issuer Interface Unit 55. The authorisation request 42 (with the appended MA transaction ID 64) is then encrypted by the encryption/decryption unit 47 and the encrypted authorisation request is then transmitted to the appropriate Card Issuer Server 7 or 9 identified by the Card Issuer details 61.

Once a transaction authorisation or failure message is received by the MA Server 5, the controller 51 identifies the unique MA transaction ID 64 included in the received message, and then moves the corresponding authorisation request 42 from the pending requests data store 63 to the authorised requests data store 65 or the failed requests data store 67. The controller 51 also stores the received authorisation or failed message with the request. The controller 51 then sends a corresponding transaction authorisation message or transaction failed message back to the terminal which originally sent the authorisation request 42, which is identified by the merchant details 39 included in the received authorisation request 42.

### Mobile Telephone Transaction Card Issuer Server

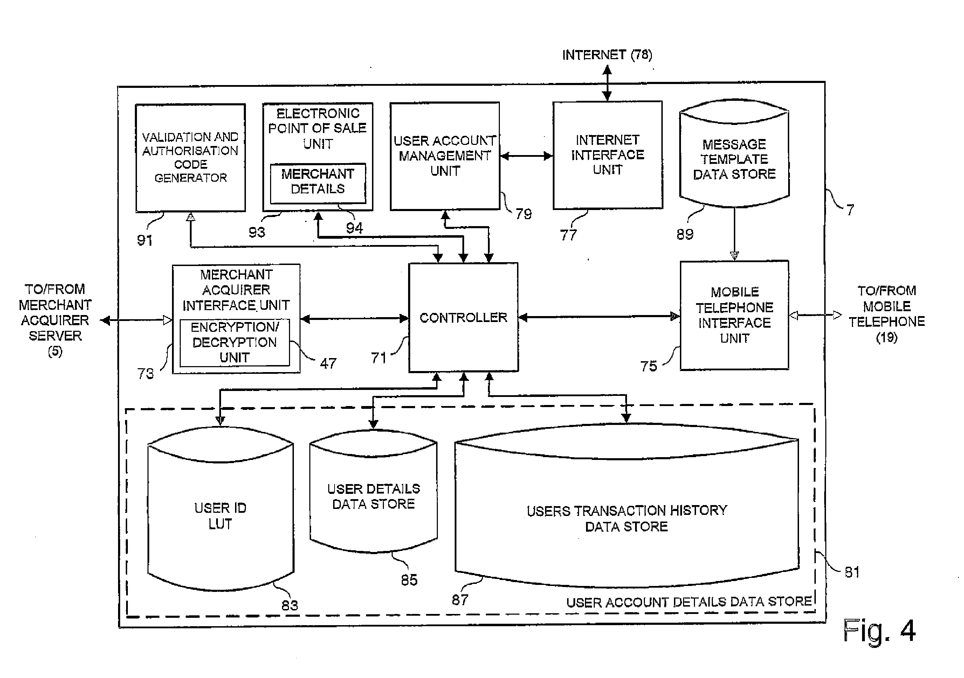

Figure 4 shows the functional elements of the Mobile Telephone Transaction Card (MTTC) Issuer Server 7 used in this embodiment. As shown, the MTTC Issuer Server 7 includes a controller 71 which carries out processing operations in response to i) transaction authorisation requests received from the MA Server 5 via a Merchant Acquirer Interface Unit 73; ii) user authentication received from the mobile telephone 19 via a Mobile Telephone Interface Unit 75; and iii) user account management instructions received via the Internet 78, an Internet Interface Unit 77 and a User Account Management Unit 79. The Merchant Acquirer Interface Unit 73 also includes an encryption/decryption unit 47 for encrypting transaction authorisation requests and authentication messages which are transmitted to MA Server 5 and for decrypting the transaction authorisation requests received from the MA Server 5.

The MTTC Issuer Server 7 also includes a user account details data store 81 comprising a user identification number Look-up Table (User ID LUT) 83, a user details data store 85 and a users transaction history data store 87. As will be described in more detail later, the user account management unit 79 creates and modifies the account details stored in the user account details data store 81 in response to user input received via the Internet Interface Unit 77.

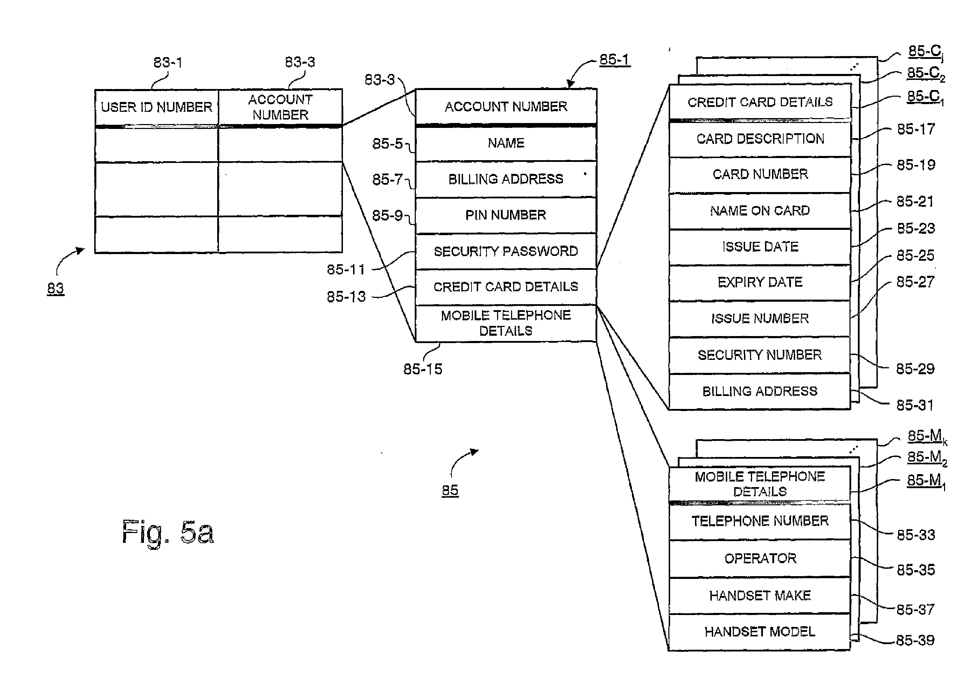

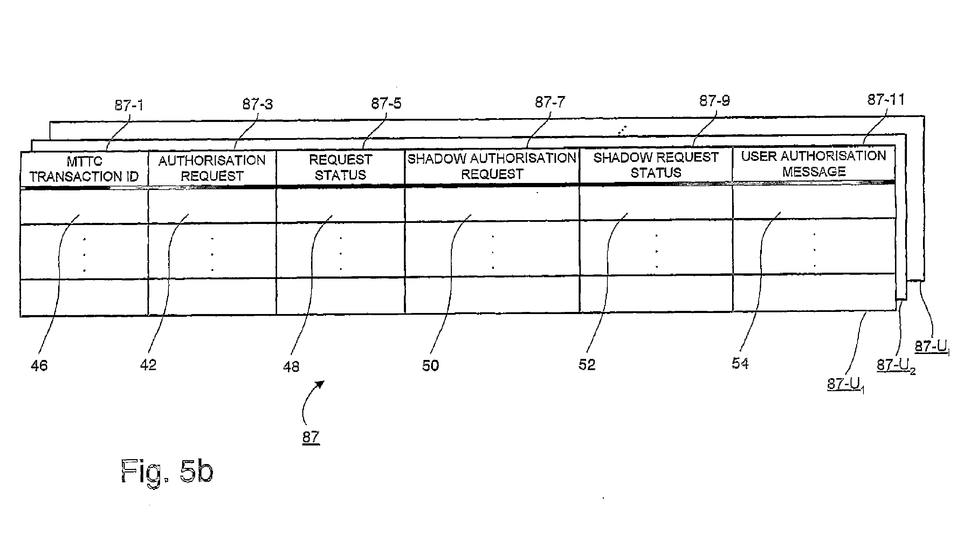

Figures 5a and 5b illustrate the data structure used in this embodiment to store the user account details in the user account details data store 81. In particular, Figure 5a illustrates the data structure used to store user account details in the User ID LUT 83 and the user details data store 85; and Figure 5b illustrates the data structure used to store user transaction history details in the user's transaction history data store 87.

As shown in Figure 5a, the User ID LUT 83 includes a list of user identification numbers 83-1 for all the users who have created an account with the MTTC Issuer Server 7 and the corresponding user account numbers 83-3. Corresponding user account details 85-1 are stored in the user details data store 85 for each user account number 83-3 in the User ID LUT 83. In this embodiment, the stored user account details 85-1 include the user's name 85-5, the user's billing address 85-7, the user's Personal Identification Number (PIN) 85-9, the user's security password 85-11, the user's credit card details 85-13 and the user's mobile telephone details 85-15.

In this embodiment, a user may have more than one credit card and, as shown, the user details data store 85 stores credit card details 85-Cl, ..., 85-Cj for each of the user's credit cards. The stored credit card details for each credit card B5-Cl include a credit card description 85-17 provided by the user to identify the particular card (e.g. "my Visa"), the credit card number 85-19, the name that appears on the credit card 85-21, the credit card issue date 85-23, the credit card expiry date 85-25, the credit card issue number (if available) 85-27, the security number 85-29 which is printed on the credit card (if available) and the billing address 85-31 for the credit card 85-Cl. The user may also include debit card details within the "credit card details" store 85-13.

Similarly, a user may have more than one mobile telephone 19 and the user details data store 85 stores mobile telephone details 85-M1, ..., 85-Mk for each mobile telephone 19 that the user has registered. The stored mobile telephone details for each mobile telephone 85-M1 include the mobile telephone number 85-33, the mobile telephone network operator 85-35 and the mobile telephone handset make 85-37 and model 85-39.

Referring to Figure 5b, the users transaction history data store 87 includes, for each transaction authorisation request 42 received from the MA Server 5:
i) a field 87-1 for storing a transaction ID 46 generated by the MTTC issuer server 7;
ii) a field 87-3 for storing the received authorisation request 42;
iii) a field 87-5 for storing the current request status 48 which can either be pending, failed or authorised;
iv) a field 87-7 for storing a shadow authorisation request 50;
v) a field 87-9 for storing a shadow request status 52; and
vi) a field 87-11 for storing a user authorisation message 54.

In this embodiment, a separate table 87-U1 ,..., 87-Ui of transaction history data is stored for each user to facilitate billing and the handling of user account queries.

Referring back to Figure 4, during a transaction operation, the controller 71 receives the authorisation request 42 which includes the user identification number 17 from the MA Server 5. In response, the controller 71 retrieves the account number 83-3 from the User ID LUT 83 that corresponds to the received user identification number 17. The controller 71 then retrieves the transaction history table 87-U1 corresponding to the user's account number from the users transaction history data store 87 and generates the unique MTTC transaction ID 46 for the current authorisation request 42. The controller 71 then populates the user's transaction history table 87-U1 with the authorisation request 42 under the unique MTTC transaction ID 46 and sets the current status 48 for the request 42 to pending.

After storing the received authorisation request 42, the MTTC transaction ID 46 and the request status 48 in the user transaction history table 87-U1, the controller 71 retrieves the user account details 85-1 corresponding to the user's account number 83-3 from the user details data store 85. In particular, the controller 71 retrieves the user's mobile telephone details 85-15 and a list of the card descriptions 85-17 from the user's credit card details 85-13. The controller 71 then passes the retrieved mobile telephone and credit card details together with the transaction details 40 (extracted from the current authorisation request 42) and MTTC transaction ID 46 for the current authorisation request 42, to the Mobile Telephone Interface Unit 75.

In response, the Mobile Telephone Interface Unit 75 generates a mobile telephone text message suitable for the user's mobile telephone, using a suitable message template chosen from a message template data store 89. In particular, the interface unit 75 uses the make 85-37 and model 85-39 details to select an appropriate text message template from the template data store 89. The interface unit 75 then populates the template message with the transaction details 40 and the credit card details 85-13 and then sends the message to the user's mobile telephone 19 using the retrieved telephone number. The controller 71 then waits for a reply from the user's mobile telephone 19.

When the controller 71 receives a message from the user's mobile telephone 19 via the Mobile Telephone Interface Unit 75, the controller 71 determines if the received message is a transaction authorisation message or a transaction not authorised message from the user. If the message is a transaction not authorised message, then the controller 71 identifies the MTTC transaction ID 46 from the received message and changes the corresponding request status 48 to failed and then transmits a transaction not authorised message to the MA Server 5 via the Merchant Acquirer Interface Unit 73.

On the other hand, if the received mobile telephone message is a user authorisation message, then the received message will also include the user's selection of which credit card to use for the current transaction. The controller 71 then retrieves the credit card details 85-13 for the selected credit card from the user details data store 85 and the transaction details 40 from the stored authorisation request 42. The controller 71 then sends the transaction details 40, the selected credit card details and the corresponding MTTC transaction ID 46 to an Electronic Point of Sale Unit 93 included in the MTTC Issuer Server 7.

The Electronic Point of Sale (EPOS) Unit 93 then generates a shadow transaction authorisation request 50 including the received transaction details 40, the selected credit card details 85-13 and the MTTC transaction ID 46. The EPOS Unit 93 also stores "merchant details" 94 for identifying the MTTC Issuer Server 7 as the merchant, which are also included within the shadow transaction authorisation request 50 so that the shadow transaction reply message will be returned to the MTTC Issuer Server 7. The EPOS unit 93 then passes the shadow transaction authorisation request 50 back to the controller 71 which stores the shadow authorisation request 50 in the appropriate field 87-7 of the user transaction history table 87-U1. The controller 71 also sets the corresponding shadow request status 52 to pending. The original transaction details and the shadow transaction details are both associated with the same MTTC transaction ID 46 so that the original transaction can be identified when authorisation for the shadow transaction authorisation request 50 has been received. The controller 71 then transmits the shadow transaction authorisation request 50 to the MA Server 5 via the Merchant Acquirer Interface Unit 73.

Once a shadow transaction authorisation or failure message is received back from the MA server 5, the controller 71 updates the shadow request status 52 in the user transaction history table 87-U1 and retrieves the corresponding original authorisation request 42. If the shadow transaction fails, then the controller 71 transmits a transaction not successful message (which includes the MA transaction ID) back to the MA Server 5 which forwards the message to the appropriate merchant EPOS terminal 3.

On the other hand, if the shadow transaction is authorised, then the controller 71 sends the transaction details to a Validation and Authorisation Code Generator 91 which generates an authorisation code for the original transaction which it passes back to the controller 71. The controller 71 then transmits the MTTC authorisation code together with the MA transaction ID to the MA Server 5 via the Merchant Acquirer Interface Unit 73, which indicates that the transaction has been successfully authorised and processed.

The controller 71 then updates the request status 48 for the original authorisation request 42 to authorised and also stores the generated authorisation code with the updated status. The controller 71 then sends a mobile telephone message to the user's mobile telephone 19 via the mobile telephone Interface Unit 75 to inform the user that the transaction has been successful.

### Mobile Telephone

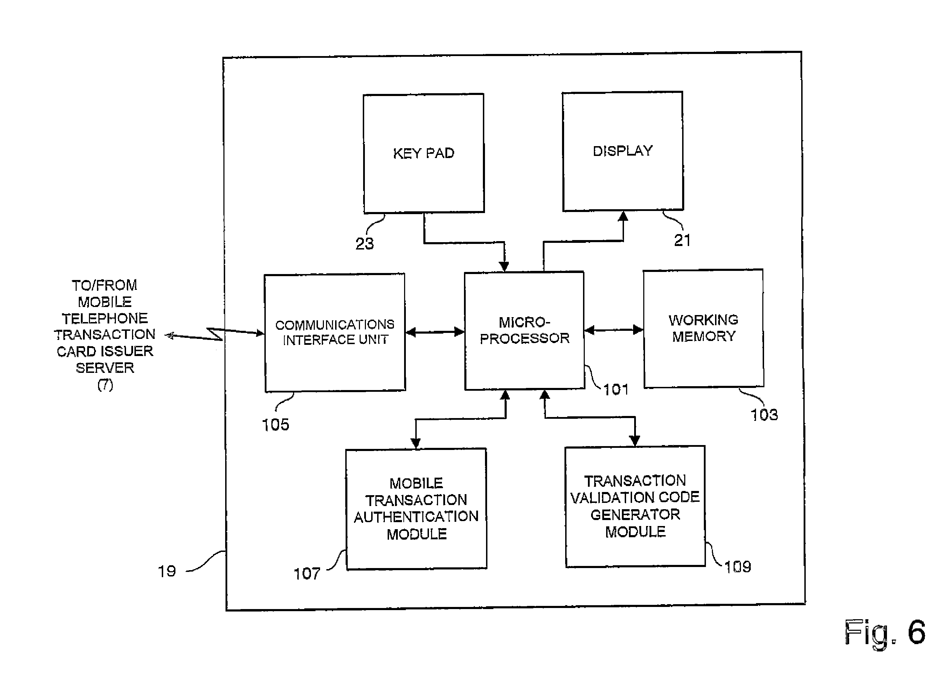

Figure 6 shows the functional elements of the mobile telephone 19 used in this embodiment. As shown, a microprocessor 101 is arranged to process inputs from a keypad 23 and to control output on a display 21, and also to provide control and processing for the other functional units. A working memory 103 is provided for use by the microprocessor 101 and the other functional units.

Microprocessor 101 is also operable to receive mobile telephone authorisation request messages from and send authorisation messages to the MTTC Issuer Server 7 via a Communications Interface Unit 105. The mobile telephone 19 also includes a mobile transaction authentication module 107 and a transaction validation code generator module 109 which store processing instructions used to control the operation of the microprocessor 101 in response to user input from the keypad 23 and mobile telephone authorisation request messages received from the MTTC Issuer Server 7 via the Communications Interface Unit 105.

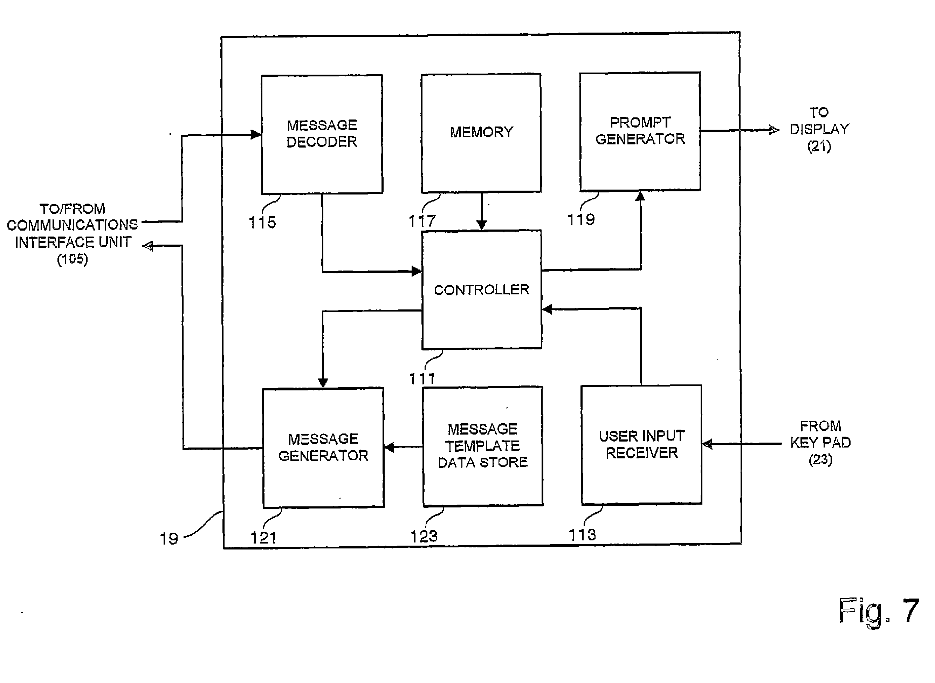

In particular, when a mobile telephone authorisation request message is received, the microprocessor 101 loads the processing instructions stored in the mobile transaction authentication module 107 into the working memory 103. Figure 7 illustrates the functional elements of the mobile telephone 19 when configured to carry out the processing operations in accordance with the instructions stored in the mobile transaction authentication module 17. As shown, the functional elements include a central controller 111 which is arranged to process inputs from the keypad 23 via a user input receiver 113, and mobile telephone authorisation request messages received from the Communications Interface Unit 105 via the message decoder 115. The message decoder 115 receives the mobile telephone authorisation request messages from the MTTC Issuer Server 7 via the Communications Interface Unit 105 and decodes the message to retrieve the transaction details 40 and the list of credit card descriptions 85-17, which are then stored in a memory 117. The controller 111 then controls a prompt generator 119 to generate an appropriate user prompt screen which is displayed to the user on the display 21 to prompt the user to authorise the transaction and to choose one of their credit cards to carry out the transaction.

The mobile telephone 19 also includes a message generator 121 which generates, if the transaction is authorised, an authorisation message including the user's authorisation, the transaction details 40 and the user's selected credit card description. On the other hand, if the transaction is not authorised, then the message generator 121 generates a "transaction not authorised" message. The mobile telephone 19 also stores message templates in a message template data store 123 which are used by the message generator 121 to generate the appropriate message. The generated message is then transmitted back to the MTTC Issuer Server 7 via the Communications Interface Unit 105.

### Transaction Process

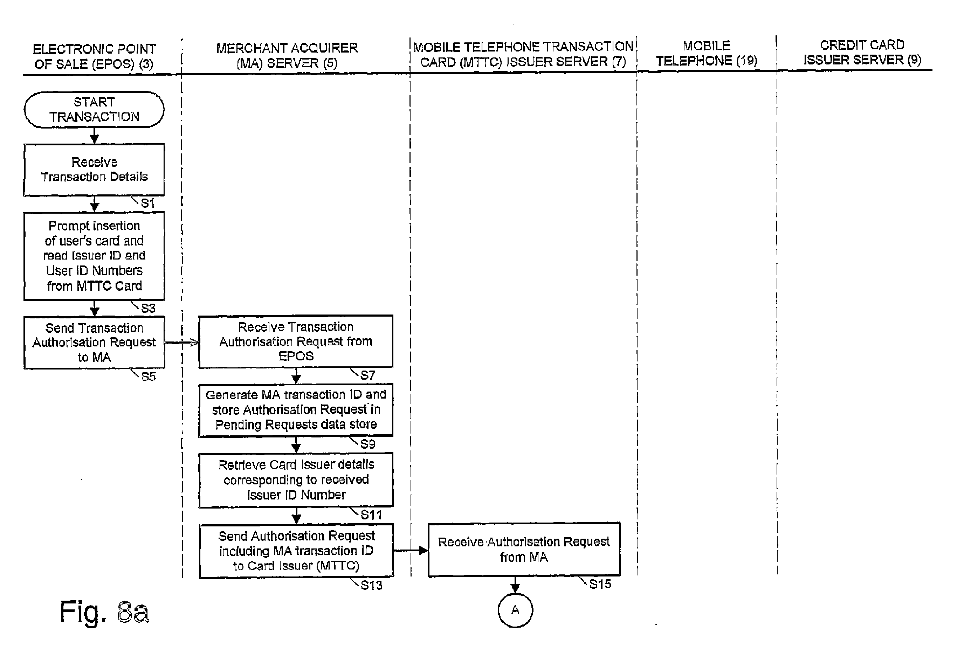

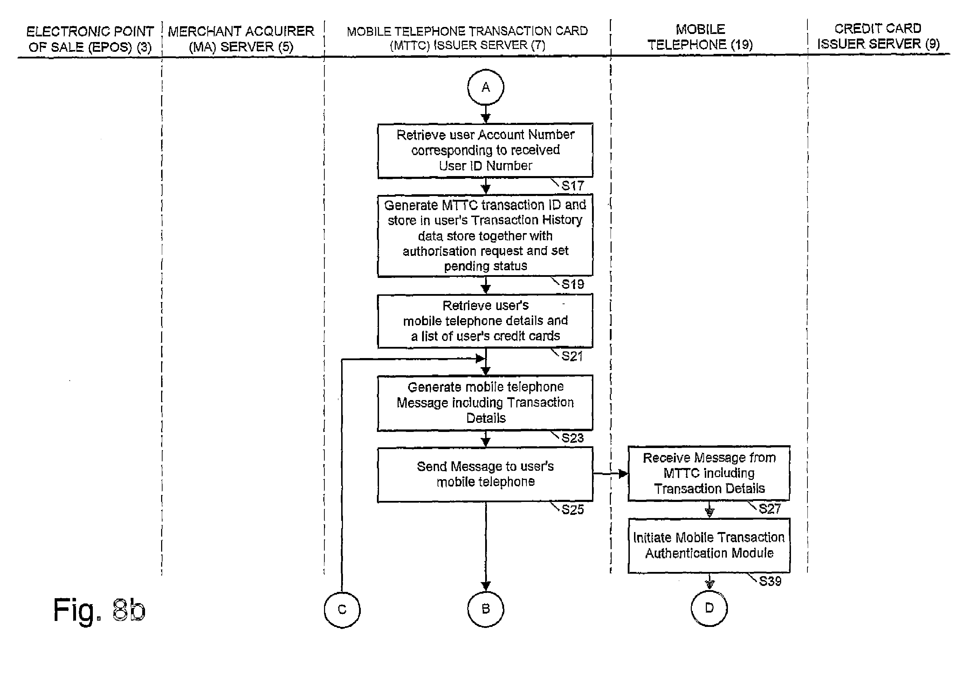

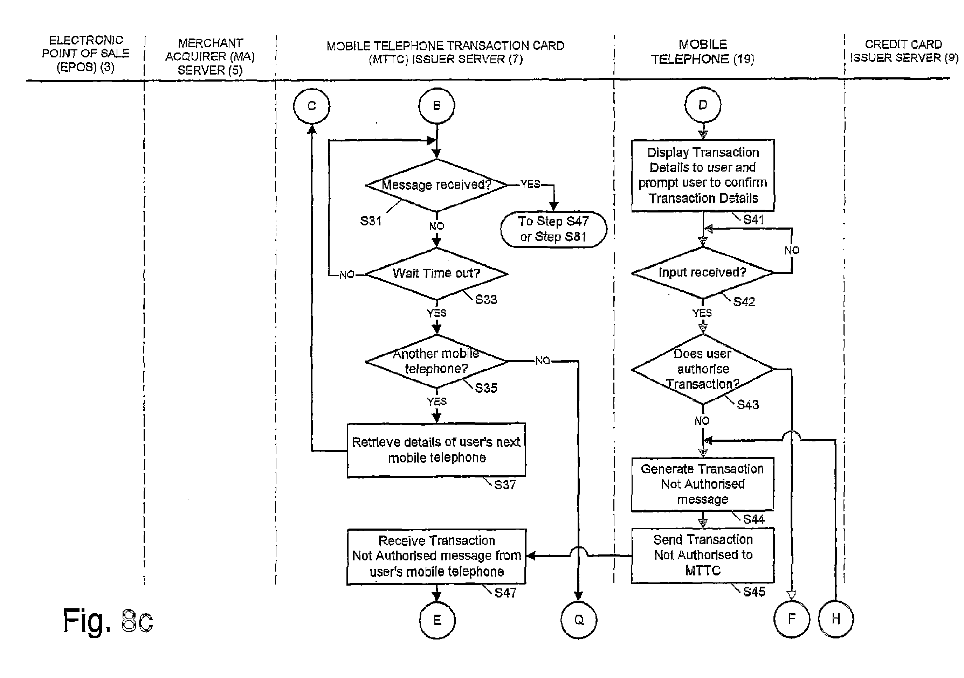

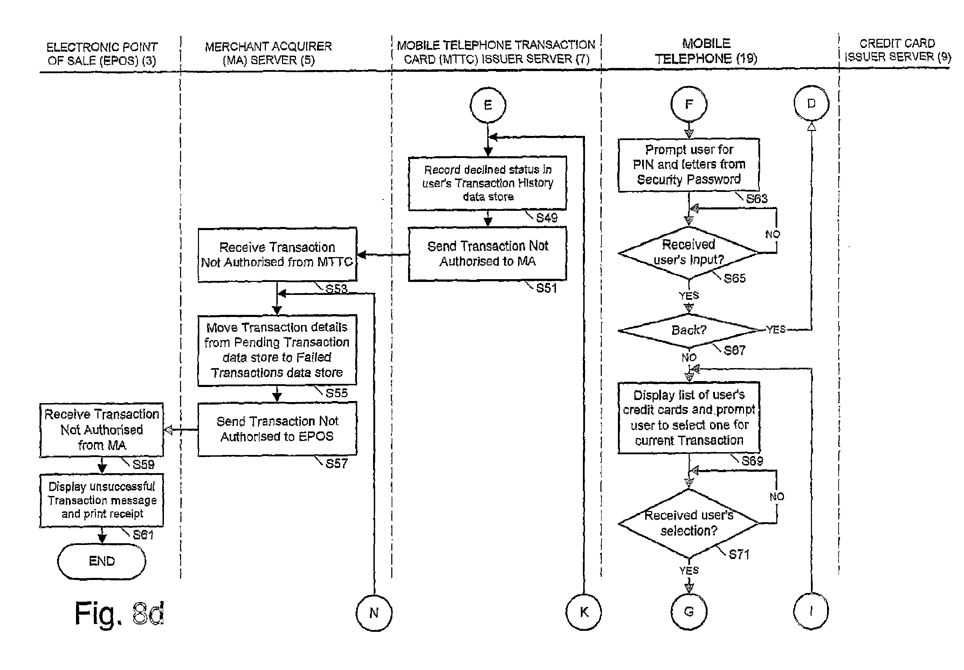

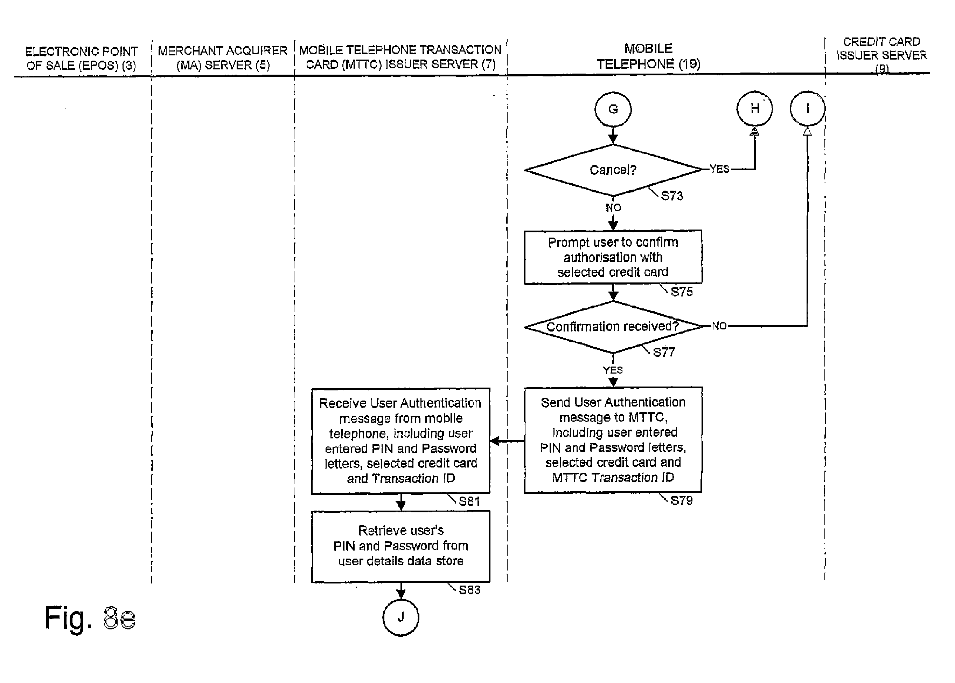

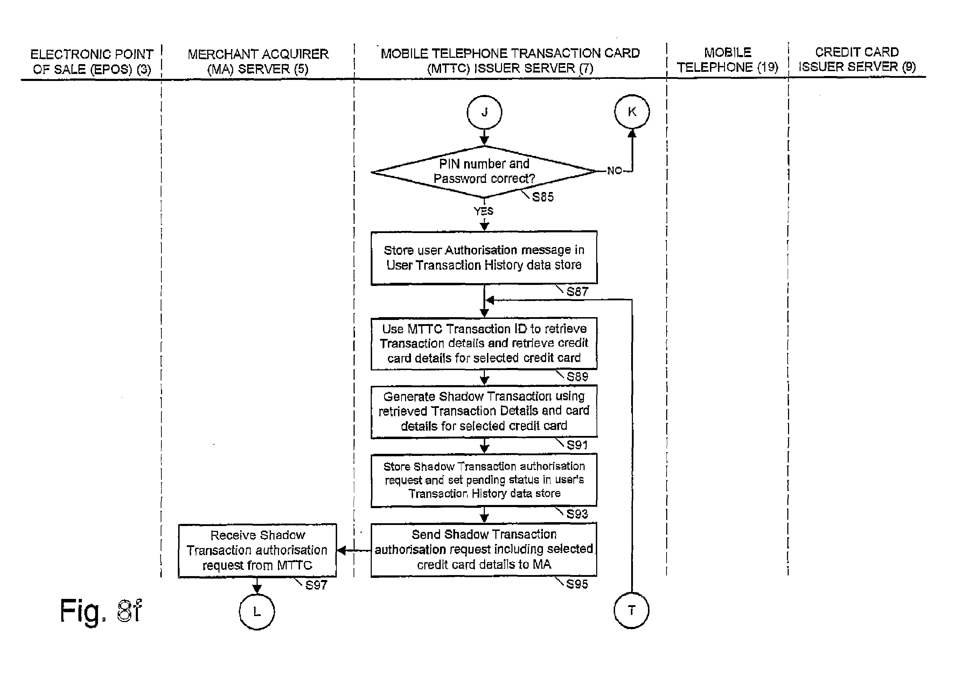

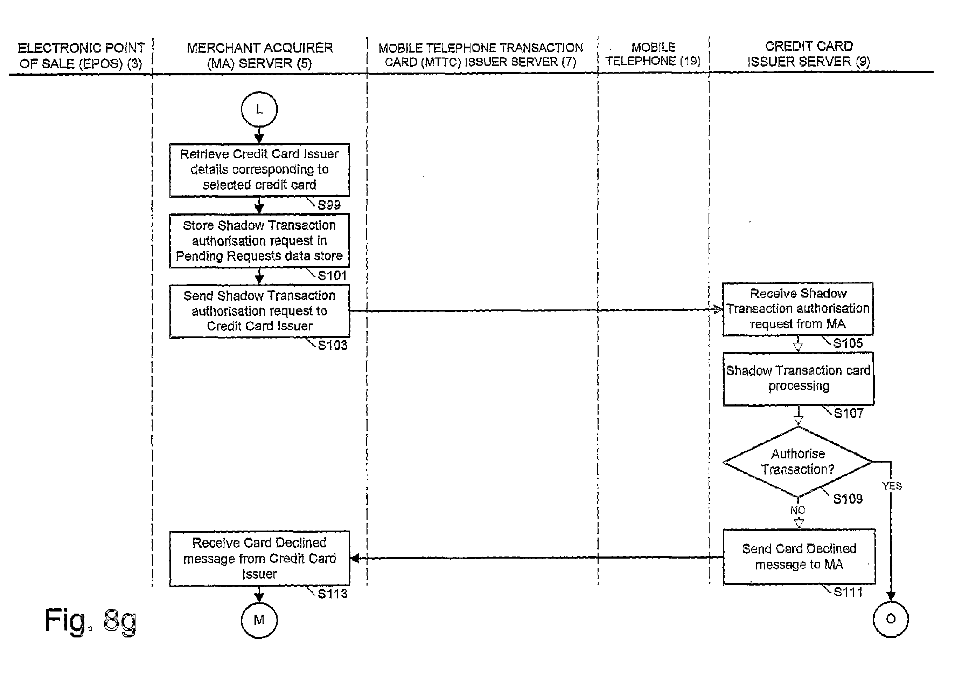

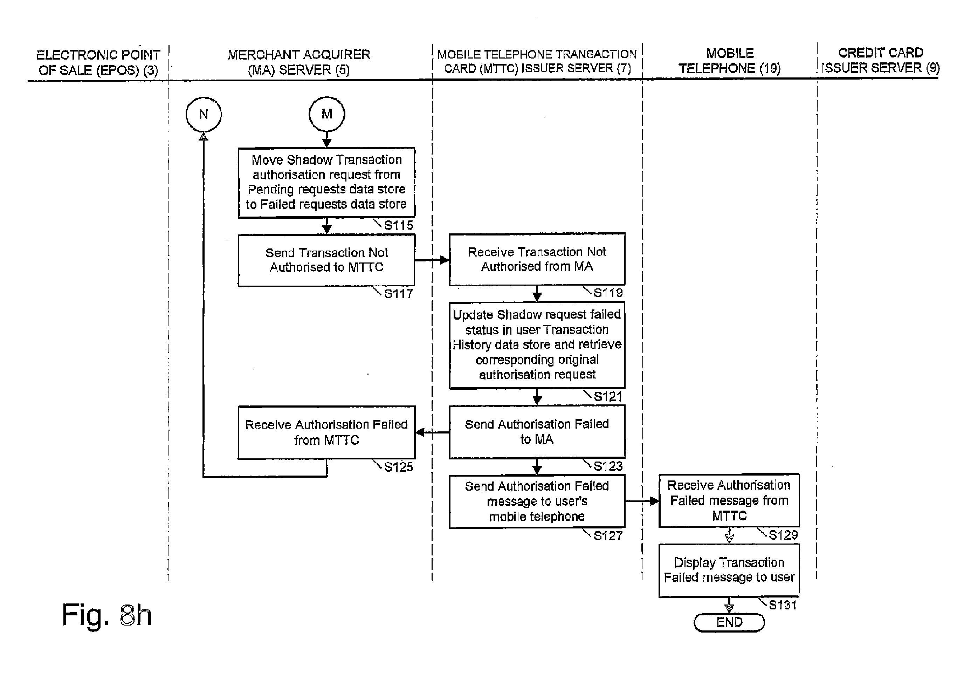

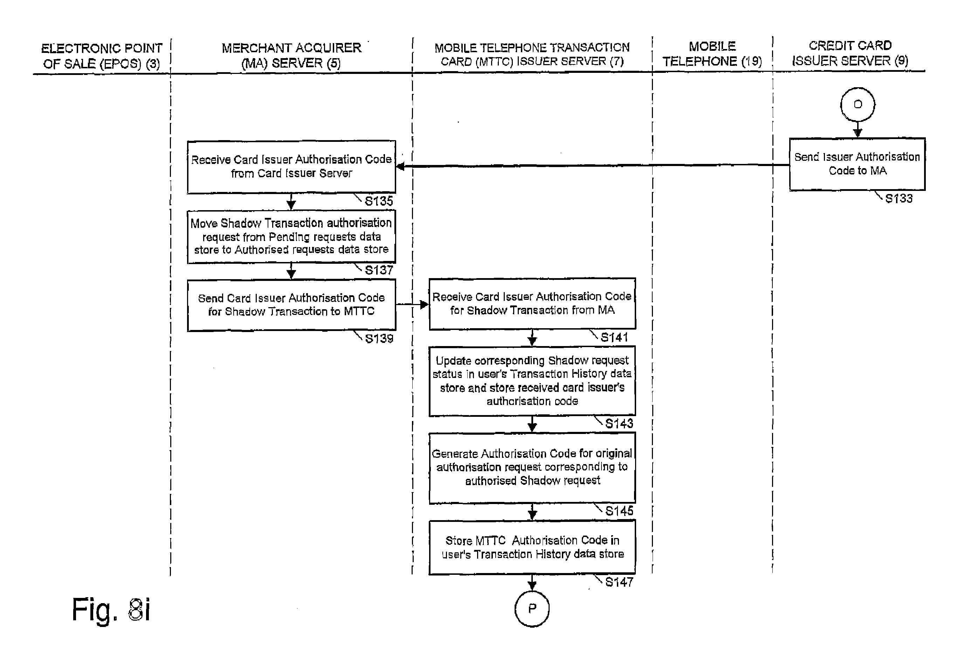

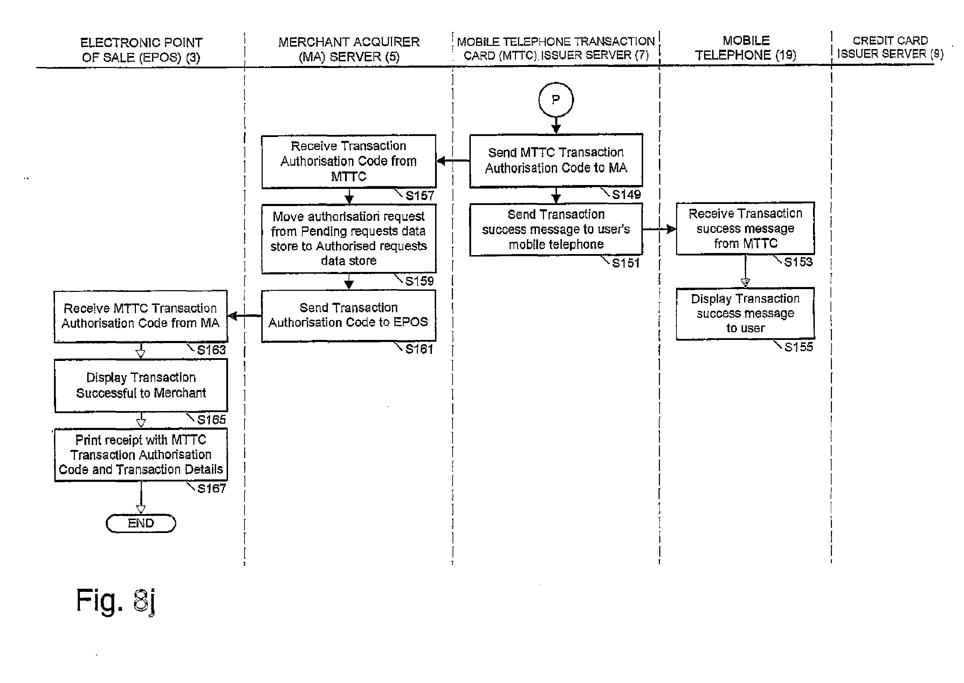

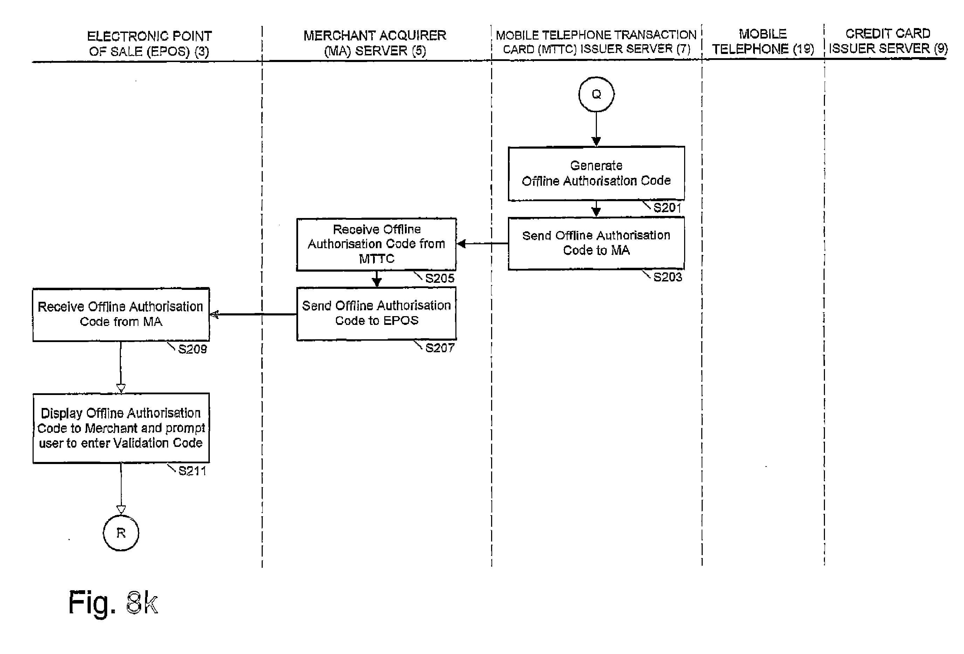

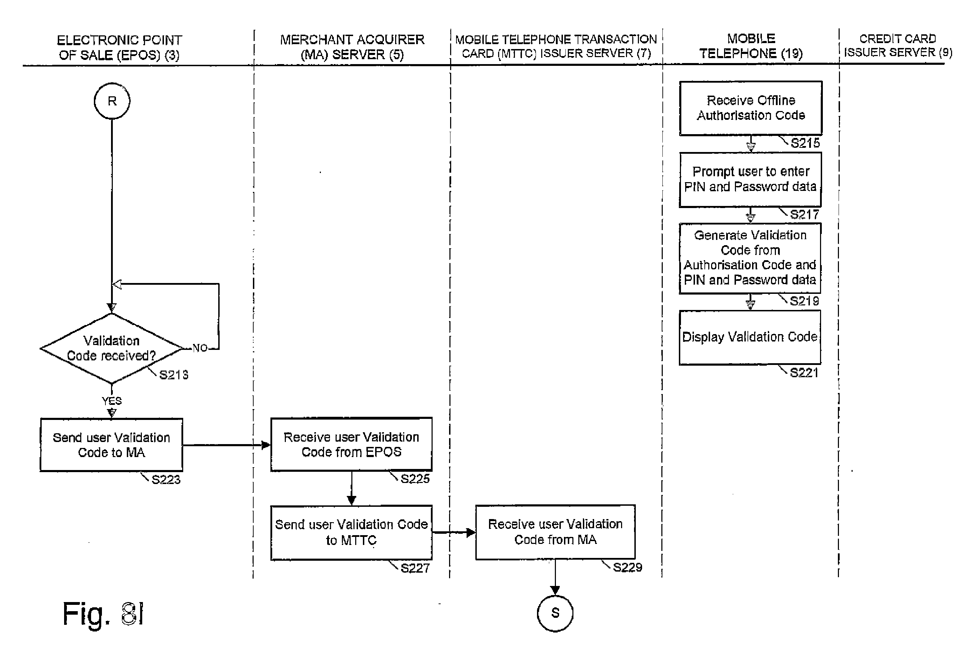

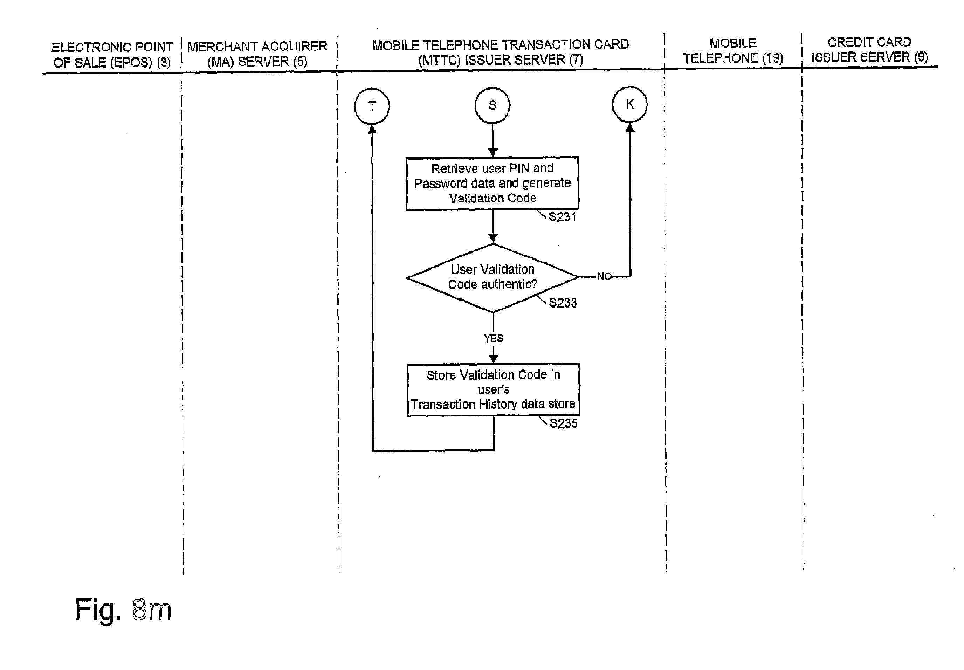

A brief description has been given above of the components forming part of the transaction processing system of this embodiment. A more detailed description of the operation of these components in this embodiment will now be given for an example transaction. Referring to Figure 8, which comprises Figures 8a to 8m, there are shown the principal processing steps which are performed to complete a purchase transaction using the secure transaction system of the present embodiment.

At step S1, the EPOS Terminal 3 receives the transaction details 40 entered by the merchant for the products that the user wishes to purchase. Next, at step S3, the EPOS terminal 3 prompts the merchant to insert the user's card into the card reader 37, and once inserted reads the user's card number 13 (which includes the issuer identification number 15 and the user identification number 17). In this embodiment, the MTTC 11 has a sixteen digit card number 13. The first four digits of the card number 13 is the card issuer identification number 15 which is used by the MA server 5 to identify the MTTC Issuer Server 7, and the remaining twelve digits is the user identification number 17 which is used by the MTTC issuer server 7 to identify the user or card owner.

At step S5, the EPOS Terminal 3 sends an authorisation request (which includes the transaction details 40 and the card number 13) to the MA Server 5 via the Merchant Acquirer Interface Unit 45, which receives the authorisation request at step S7. At step S9, the MA Server 5 generates a unique MA transaction ID 64 for the received transaction authorisation request 42 and stores the authorisation request 42 together with the generated MA transaction ID 64 in the pending requests data store 63.

At step S11, the MA Server 5 retrieves the card issuer details 61 corresponding to the received issuer ID number 15 from the Card Issuer Look-up Table (LUT) 57 and identifies the location of the card issuer so that the authorisation request 42 can be sent to the corresponding card issuer server. The MA Server 5 then sends, in step S13, the authorisation request 42 including the MA transaction ID 64 to the card issuer server identified at step S11. In this case, the received card issuer ID number 15 corresponds to the MTTC Issuer and therefore, the MA server 5 sends the request to the MTTC Issuer Server 7.

At step S15, the MTTC Issuer Server 7 receives the authorisation request 42 from the MA Server 5. The MTTC Issuer Server 7 then retrieves, in step S17, the user's account number 83-3 corresponding to the user ID number 17 in the received authorisation request from the User ID LUT 83. At step S19, the user's transaction history table 87-U1 is located and a unique MTTC transaction ID 46 is generated for the received request 42. The generated MTTC transaction ID 46 is also stored in step S19, in the user's transaction history table 87-U1 along with the received authorisation request 42. The request status 48 is also updated in step S19 to record the request's pending status.

After the authorisation request 42 has been stored, the controller 71 retrieves, in step S21, the user's mobile telephone details 85-15 from the user details data store 85 as well as a list of credit card descriptions 85-17 from the user's credit cards details 85-13 which it passes to the interface unit 75. The mobile telephone details 85-15 are received by the mobile telephone Interface Unit 75 at step S8-23 which uses them to generate a mobile telephone message including the transaction details and the list of credit card descriptions. The generated message is then sent to the user's mobile telephone 19 at step S25 which is received by the mobile telephone 19 at step S27.

After sending the message at step S25, the MTTC Issuer Server 7 proceeds to step S31 which checks if a reply message from the mobile telephone 19 has been received. If no message has been received yet, then the processing proceeds to step S33 where it is determined if a predetermined waiting time has elapsed. If the waiting time has not elapsed, then processing returns to step S8-31. If a reply is not received within the time out period, then the processing proceeds to step S35 where the MTTC Issuer Server 7 determines if the user has another mobile telephone and, if so, retrieves the mobile telephone details 85-15 for the next mobile telephone from the user details data store 85 at step S37. The processing then returns to step S23 so that another message can be sent to the new mobile telephone. This operation continues until a reply message has been received at step S31 or until there are no more mobile telephone numbers registered in the MTTC Issuer Server 7. In this case, none of the user's mobile telephones has been able to receive the mobile telephone messages and processing therefore proceeds from step S35 to step S201 (shown in Figure 8k) where user authorisation is obtained in an "offline" manner, which will be described in more detail later.

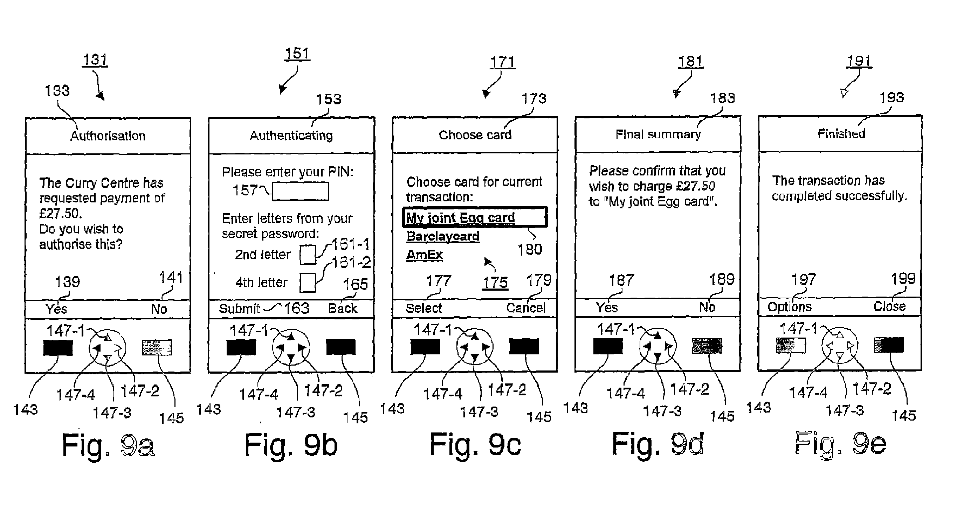

Returning back to step S27, when the mobile telephone 19 receives the mobile telephone message, the mobile transaction authentication module 107 is initiated at step S39 and processing instructions are loaded into the working memory 117 to configure the mobile telephone 19 to perform the processing operations to deal with the received message. Initially, the message is decoded by the message decoder 115 to extract the transaction details 40 and the list of credit card descriptions 85-17, which are then stored in the memory 117. The prompt generator 119 then displays the transaction details 40 and prompts the user to confirm them in step S41. Figure 9a shows the prompt screen 131 which is generated and displayed at step S41 in this embodiment. As shown, the prompt screen 131 includes the heading "Authorisation" 133, the transaction details 40 and a prompt to the user to confirm if the user wants to authorise the transaction. In this embodiment, the transaction details 40 included in the prompt screen 131 displayed to the user include the merchant details 39 (in this case, the merchant's name, "The Curry Centre") and the total cost of the transaction (in this case, £27-50).

The generated prompt screen 131 also includes two options for the user to select, in this case, a "Yes" option 139 to proceed with the transaction authorisation procedure, and a "No" option 141 to terminate the transaction authorisation procedure. Also shown in Figure 9a are buttons 143 and 145 which correspond to the user selectable options "Yes" 139 and "No" 141. Buttons 143 and 145 form part of the keypad 23 of the mobile telephone 19 and are located adjacent and below the corresponding displayed option, so that the user is prompted to press the appropriate button to select the corresponding option. The keypad 23 also includes four directional buttons: = an UP button 147-1, a RIGHT button 147-2, a DOWN button 147-3 and a LEFT button 147-4. In this embodiment, the directional buttons are not used when the present prompt screen 131 is displayed.

Referring back to Figure 8c, in step S42, the mobile telephone 19 waits for the user to press button 143 or 145 in response to the prompt screen 131. As shown, the processing remains at step S42 until the user has pressed a button. When the user has pressed a button the processing proceeds to step S43, where the controller 111 determines if the user pressed button 145 corresponding to the "No" option 141 or button 147 corresponding to the "yes" option.

### User Not Authorised

If at step S43, the controller 111 determines that the user has pressed button 145 indicating that the user does not authorise the transaction, then the processing proceeds to step S44 where a "Transaction Not Authorised" message is generated by the message generator 121 (which includes the transaction details 40 and the MTTC transaction ID 46). At step S45, the "Transaction Not Authorised" message is sent to the MTTC Issuer Server 7 and the mobile telephone message is received at step S47 and decoded to retrieve the transmitted data.

At step S49, the MTTC issuer server 7 extracts the MTTC transaction ID 46 from the received message and the appropriate field 87-5 in the user's transaction history table 87-U1 is updated to indicate that user authorisation has not been given. The processing then proceeds to step S51, where a "Transaction Not Authorised" message together with the corresponding MA transaction ID 64 (obtained from the authorisation request 42) are sent back to the MA Server 5 and received at step S53.

In response, the MA Server 5 retrieves the MA transaction ID 64 from the received message and locates, in step S55, the corresponding authorisation request 42 in the pending requests data store 63. The controller 51 then moves, in step S55, the authorisation request from the pending requests data store 63 to the failed requests data store 67 and a "Transaction Not Authorised" message is sent back to the appropriate EPOS Terminal 3 (identified by the merchant details 39 in the authorisation request 42) in step S57.

At step S59, the EPOS Terminal 3 receives the "Transaction Not Authorised" message from the MA Server 5 and displays an unsuccessful transaction message to the merchant on display 41 at step S61, to complete the unsuccessful transaction.

### User Authorised

Returning back to step S43, if on the other hand, the controller 111 determines that the user pressed button 143 to select the "Yes" option 139 to indicate that the user wishes to authorise the transaction, then the processing continues to step S63. At step S63, the prompt generator 119 generates a second prompt screen which is displayed to the user to prompt the user for his or her PIN number 85-9, as well as two randomly chosen letters from the user's security password 85-11.

Figure 9b shows the prompt screen 151 generated at step S63 in this embodiment. As shown, the prompt screen 151 includes the heading "Authenticating" 153, a prompt "Please enter your PIN:", a text box 157 for the user to enter his or her PIN 85-9 via the keypad 23, prompts for two letters randomly chosen from the user's secret password 85-11 by the prompt generator 119 and two corresponding text boxes 161-1 and 161-2 for the user to enter the appropriate letters via the keypad 23. The prompt screen 151 also includes a "Submit" option 163 which allows the user to submit the PIN and password letters after they have been entered and a "Back" option 165 which allows the user to view the previous prompt screen 131 shown in Figure 9a.

Figure 9b also shows buttons 143 and 145 as well as the directional buttons 147-1 to 147-4 as described above. In this case, button 143 corresponds to the "Submit" option 163 and button 145 corresponds to the "Back" option 165. The UP 147-1 and DOWN 147-3 directional buttons are used to select the input text boxes 157, 161-1 and 161-2 so that the corresponding input can be entered. The RIGHT 147-2 and LEFT buttons 147-4 are used to move a cursor (not shown) within the selected text box in order to insert or delete characters at a specific position within the text box.

At step S65, processing waits for the user to enter the PIN and the specified letters from the security password, and to press button 143 corresponding to the "Submit" option 163 or button 145 corresponding to the "back" option. Once button 143 or 145 has been pressed, the processing proceeds to step S67 when the controller 111 determines which button has been pressed. If the user pressed button 145 for the "Back" option 165, then the processing returns to step S41 and the prompt generator 119 re-generates the prompt screen 131 shown in Figure 9a to redisplay the transaction details 40 to the user and re-prompt the user to authorise the transaction details.

Once the user has entered their PIN and letters from the security password, and pressed button 143 corresponding to the "Submit" option 163, then the processing proceeds to step S69, where the prompt generator 119 retrieves, via the controller 111, the list of descriptions of the user's credit cards stored in the memory 117 and generates a prompt screen to display the list of credit cards to the user and prompting the user to select one card to use for the current transaction.

Figure 9c shows the prompt screen 171 which is generated at step S69 in this embodiment. As shown, the prompt screen 171 includes a heading "Choose card" 173, a prompt "Choose card for current transaction:" 175, and a list of credit card descriptions 175. Three descriptions are shown in the example prompt screen 171, however the list 175 will include a description for each credit card stored in the user details data store 85 on the MTTC Issuer Server 7. The prompt screen 171 also includes a "Select" option 177 and a "Cancel" option 179. Figure 9c also shows buttons 143 and 145 as well as the directional buttons 147-1 to 147-4 as described above. In this case, button 143 corresponds to the "Select" option 177 and button 145 corresponds to the "Cancel" option 179. The UP 147-1 and DOWN 147-3 directional buttons are used to select a card description from the list of card descriptions 175 (by moving the rectangular selection window 180), and the RIGHT 147-3.and LEFT 147-4 directional buttons are not used for this prompt screen 171.

Referring back to Figure 8d, at step S71, the controller 111 waits for the user to make a selection or press the cancel button 145. The processing then proceeds to step S8-73, where the controller determines if the user has pressed the Cancel button 145. If he has, then the processing returns to step S44 where the message generator 121 generates a "Transaction Not Authorised" message and processing continues as described above to communicate the "Transaction Not Authorised" message back to the EPOS Terminal 3 via the MTTC Issuer Server 7 and the MA Server 5.

On the other hand, if at step S73 the user has selected a card and pressed the Select button 143, then the processing proceeds to step S75, where the prompt generator 119 generates a prompt screen to prompt the user to confirm authorisation for the transaction with the credit card selected at step S71.

Figure 9d shows the prompt screen 181 generated at step S75 in this embodiment. As shown, The prompt screen 181 includes a heading "Final summary" 183, a prompt for the user to confirm the transaction details with the selected credit card, and two options "Yes" 187 and "No" 189. Figure 9d also shows buttons 143 and 145 corresponding to the options 187 and 189, as well as the directional buttons 147-1 to 147-4 which are not used when prompt screen 181 is displayed.

The processing then proceeds to step S77 where the controller 111 determines if the user has pressed button 143 or 145. If the user has pressed button 145 indicating that confirmation is not given, then the processing returns to step S69 where the prompt screen 171 is displayed again to the user allowing them to select another credit card. On the other hand, if the controller 111 determines at step S77 that the user has pressed button 143 to confirm authorisation of the transaction with the selected credit card, then at step S79, the message generator 121 generates a user authentication message including the PIN and password letters entered by the user and data identifying which letters from the password were chosen, the credit card selected by the user at step S71 and the MTTC transaction ID 46 for the current transaction (which is stored in the memory 117).

At step S81, the MTTC Issuer Server 7 receives the user authentication message from the user's mobile telephone 19, and controller 71 identifies the user's account number 85-3 from the user's mobile telephone number 85-33 which is included in the received message. The controller 71 then retrieves, in step S83, the user's PIN 85-9 and password 85-11 from the user details data store 85 at step S83 and at step S85 the controller 71 determines if the user entered PIN and the password letters are correct by comparing them to the retrieved PIN and the appropriate letters from the retrieved password (as indicated by the data identifying the letters from the password that were chosen, which is included in the authorisation message received from the mobile telephone 19). If, at step S85 the user entered PIN and password letters are not correct, then the processing returns to step S49 where the appropriate request status 48 in the user's transaction history table 87-U1 is updated to indicate that the request has failed. The processing then continues as described above to communicate the unsuccessful authorisation back to the merchant at the EPOS Terminal 3. If, own the other hand, the user entered PIN and password letters are correct, then at step S87 the user authorisation message received at step S81 is stored in the appropriate field 87-11 of the user's transaction history table 87-U1 (which is identified using the MTTC transaction ID 46 that is included in the received message).

At step S89, the controller 71 uses the MTTC transaction ID 46 in the received message to retrieve the transaction details 40 from the corresponding authorisation request 42 stored in the user's transaction history table 87-U1 and the account number 85-3, to retrieve the credit card details 85-13 for the user selected credit card from the user details data store 85. A shadow authorisation request 50 is then generated, in step S91, by the Electronic Point of Sale (EPOS) Unit 93 which includes the transaction details 40, the retrieved card details 85-13 for the user selected credit card, the MTTC transaction ID 46 and the MTTC merchant details 94 stored in the EPOS Unit 93 (which identify the MTTC Issuer Server 7 as the "merchant" for the shadow transaction). The generated shadow authorisation request 50 is then stored, in step S93, in the appropriate field 87-7 of the user's transaction history table 87-U1 and the shadow request status 52 is set to "pending". The shadow authorisation request 50 is then sent to the MA Server 5 at step S95, and this is received by the MA server 5 at step S97.

At step S99, the controller 51 extracts the credit card issuer's ID number from the shadow authorisation request 50 and uses this to retrieve the corresponding credit card issuer details from the card issuer LUT 59. The controller 51 then generates a unique MA transaction ID for the shadow authorisation request 50 and stores, in step S101, the shadow authorisation request 50 along with the generated MA transaction ID 64 in the pending requests data store 63. At step S8-103, the controller 51 sends the shadow authorisation request 50 and the corresponding MA transaction ID 64 to the Credit Card Issuer Server 9 identified by the credit card issuer details retrieved in step S99.

The shadow authorisation request 50 is received by the Credit Card Issuer Server 9 at step 8105 and processed in the usual way in step S107 to determine if the request can be authorised or not. As those skilled in the art will appreciate, this processing step will include, for example, verifying that the selected credit card is valid and that the user has sufficient credit to make the purchase. If, at step S109, the card issuer server 9 determines that the shadow transaction cannot be authorised, for example, if the credit card is not valid or the user does not have sufficient credit to make the purchase, then at step S111, a card declined message (which includes the MA transaction ID 64) is sent back to the MA Server 5.

At step S113, the MA Server 5 receives the card declined message and uses the MA transaction ID 64 to locate the corresponding stored shadow authorisation request 50 in the pending requests data store 63. The located shadow authorisation request 50 is then moved to the failed requests data store 67 at step S115, and at step S117, a "Transaction Not Authorised" message together with the MTTC transaction ID 46 (that associates the shadow authorisation request 50 with the real transaction authorisation request 42) is sent back to the MTTC Issuer Server 7.

At step S119, the "Transaction Not Authorised" message is received by the controller 71 together with the MTTC transaction ID 4G. The controller 71 then uses the MTTC transaction ID 46, in step S121, to locate and to update the corresponding shadow request status 52 to indicate that the shadow authorisation request 50 has failed. The controller 71 then retrieves, in step S121, the original authorisation request 42 corresponding to the failed shadow authorisation request 50 and identifies from it the MA transaction ID 64 for the original request 42. The controller 71 then sends, in step S123, an authorisation failed message (which includes the MA transaction ID 64) back to the MA Server 5. The authorisation failed message is received by the MA Server 5 at step S125 and the processing returns to step S55 (discussed above), where the associated authorisation request 42 is moved from the pending requests data store 63 to the failed requests data store 67 and the unsuccessful request is communicated to the merchant at the EPOS Terminal 3.

The controller 51 also causes an authorisation failed message to be sent, in step S127, to the user's mobile telephone 19, and the message is received at step S129 and displayed to the user at step S131 to complete the unsuccessful transaction.

If at step S109 (shown in Figure 8g), the Credit Card Issuer Server 9 determines that the transaction is authorised, then the processing proceeds to step S133 (shown in Figure 8i), where the card issuer server 9 generates and sends an authorisation code to the MA Server 5 together with the MA transaction ID 64 that was included in the shadow authorisation request 50. The card issuer authorisation code is received at step S135 together with the MA transaction ID 64. The controller 51 then uses the MA transaction ID 64 to locate and move the corresponding shadow authorisation request 50, in step S137, from the pending requests data store 63 to the authorised requests data store 65. The controller 51 then sends, in step S139, the card issuer authorisation code for the shadow transaction 50 (together with the MTTC transaction ID 46 for the shadow transaction) to the MTTC Issuer Server 7.

At step S141, the card issuer authorisation code for the shadow authorisation request 50 is received, together with the MTTC transaction ID 46. The controller 71 then uses the MTTC transaction ID 46 to locate the corresponding shadow transaction authorisation request 50 in the user's transaction history table 87-U1, to update, in step S147, the shadow request status 52 to authorised (and to include the card issuer's authorisation code).

At step S145, the code generator 91 generates a MTTC transaction authorisation code for the original authorisation request 42 corresponding to the authorised shadow authorisation request 50. The controller 71 then updates the request status 48 to indicate that it has been authorised and stores with it, in step S147, the generated MTTC transaction authorisation code. The controller 71 then sends, in step S149, the MTTC transaction authorisation code (together with the MA transaction ID 64 for the original authorisation request 42) to the MA Server 5. Then, at step S151, the Mobile Telephone Interface Unit 75 generates and sends to the user's mobile telephone 19 a transaction success message (including the MTTC authorisation code). At step S153, the transaction success message is received by the mobile telephone 19 and the message is displayed to the user on the display 21 at step S155.

An example of the transaction success message which is displayed to the user at step S155 is shown in Figure 9e. As shown, the mobile telephone display 191 includes the heading "Finished" 193 and provides an "Options" option 197 (which allows the user to access details of the transaction) and a "Close" option 199 which allows the user to close the displayed message. Also shown are buttons 143 and 145 which correspond to the two user-selectable options 197 and 199, and directional buttons 147-1 to 147-4 which are not used when the transaction success message is displayed.

Returning to Figure 8j, at step S157, the MA Server 5 receives the MTTC transaction authorisation code together with the MA transaction ID 64 from the MTTC Issuer Server 7. At step S8-159, the controller 51 moves the authorisation request corresponding to the received MA transaction ID 64 from the pending requests data store 63 to the authorised requests data store 87. The controller 51 then sends, in step S161, the generated MTTC transaction authorisation code back to the EPOS. Terminal 3. At step S163, the EPOS Terminal 3 receives the MTTC transaction authorisation code from the MA Server 5 and displays a transaction successful message to the merchant at step S165. To complete the successful transaction, at step S167, the EPOS terminal 3 prints a receipt which includes the MTTC transaction authorisation code and the transaction details 40.

### Offline Authorisation Operation

If, at step S35, the MTTC issuer server 7 has not received a response from any of the user's mobile telephones, then the MTTC server 7 assumes that the user's mobile telephone is switched on but not within the coverage of the mobile telephone network, and it proceeds to carry out an "offline" authorisation procedure.

In this situation, the processing proceeds from step S35 to step S201 (shown in Figure 8k) where the authorisation code generator 91 generates an offline authorisation code which is sent, in step S203, by the controller 71 back to the MA Server 5 together with the MA transaction ID 64 and the MTTC transaction ID 46.

The MA Server 5 receives, in step S205, the offline authorisation code together with the MA and MTTC transaction IDs for the authorisation request 42. The controller 51 then uses the MA transaction ID 64 to identify the merchant details 39 associated with the authorisation request 42 so that it can forward the offline authorisation code to the appropriate EPOS terminal 3 in step S207. At step S209, the EPOS terminal 3 receives the offline authorisation code (together with the MA and MTTC transaction IDs and displays, in step S211, the offline authorisation code to the merchant on the display 41 together with a prompt for the user to enter a validation code. The EPOS terminal 3 then waits, in step S213, for a validation code to be input by the user.

The validation code is generated by the user's mobile telephone 19 when the user initiates the transaction validation code generator module 109. This process will now be described with reference to Figure 8l. At step S215, the user initiates the transaction validation code generator module 109 on the mobile telephone 19 and enters the offline authorisation code (displayed on the EPOS terminal at step S211) into the mobile telephone 19 via the keypad 23. The validation code generator module 109 then prompts the user, in step S217 to enter their PIN number and selected letters from their secret password (using for example the prompt screen 153 shown in Figure 9b). At step S219, the validation code generator module 109 generates a validation code using the offline authorisation code received at step S215 and the PIN number and password data entered at step S217, using a predetermined algorithm stored in the transaction validation code generator module 109. At step S221 the mobile telephone 19 displays the validation code on display 21 so that the user can enter the validation code into the EPOS terminal 3 at step S213.

After the user has entered the validation code at step S213, the EPOS Terminal 3 sends the user entered validation code together with the MA and MTTC transaction IDs to the MA Server 5 at step S223. The MA Server 5 receives the user entered validation code and the MA and MTTC transaction IDs at step S225 and uses the MTTC transaction ID 46 to forward the user entered validation code to the MTTC Issuer Server 7 at step S227.

At step S229 the MTTC Issuer Server 7 receives the user entered validation code together with the MTTC transaction ID 46 and at step S231 uses the MTTC transaction ID 46 to identify the user account 83-3 corresponding to the authorisation request 42 and to retrieve the corresponding user's PIN 85-9 and password 85-11 from the user details data store 85. The retrieved user PIN 85-9 and password 85-11 and the offline authorisation code (generated at step S201) are then sent to the Validation and Authorisation Code Generator 91 which uses the same algorithm used in the mobile telephone 19 to regenerate the validation code. At step S233, the controller 71 compares the validation code generated at step S231 with the user generated validation code.

If the two validation codes are the same, then the user entered validation code is determined to be authentic and the authorisation request is taken to be authorised by the usher. The processing therefore progresses to step S235 where the validation code is stored in the "user authorisation message" field 87-11 of the user's transaction history table 87-U1. The processing of the authorisation request 42 then returns to step S89 (shown in Figure 8f) described above, with the only difference that the user has not selected a particular card for the current transaction. In this embodiment, the user is able to select a default credit card to be used for such offline transactions and, accordingly, at step S87, the credit card details 85-13 for the default-selected credit card are retrieved from user details data store 85.

If at step S233 the controller 71 determines that the two validation codes are not the same, then the user entered validation code is determined to be not authentic, and the processing returns to step S49 (shown in Figure 8d) where the unsuccessful transaction request status 48 is updated to failed in the user's transaction history table 87-U1, before the processing continues to communicate the unsuccessful authorisation back to the merchant at the EPOS Terminal 3.

### User Account Management

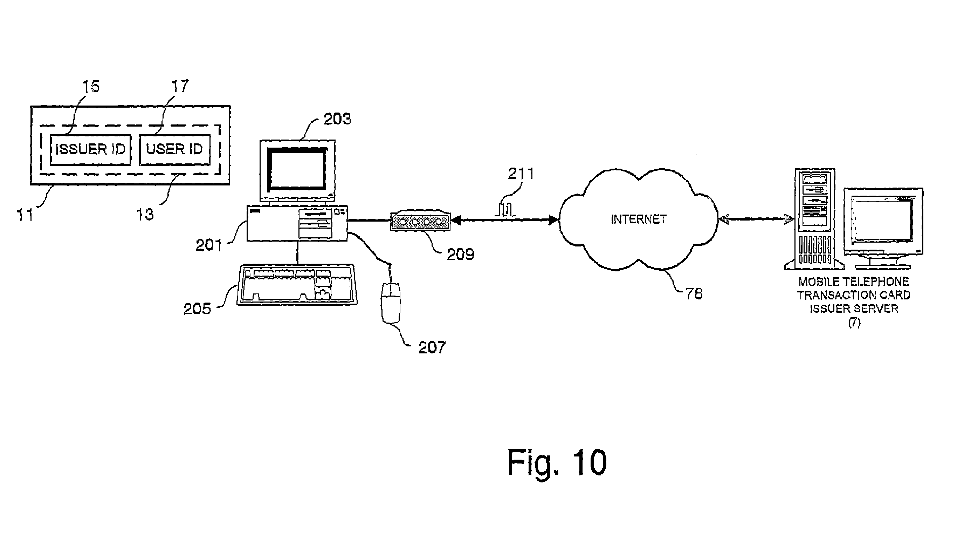

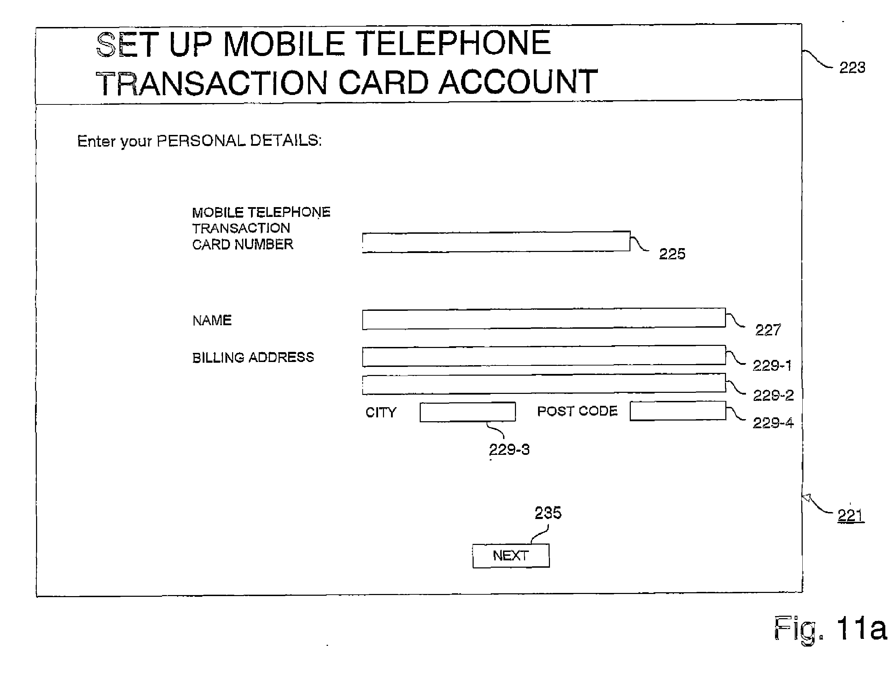

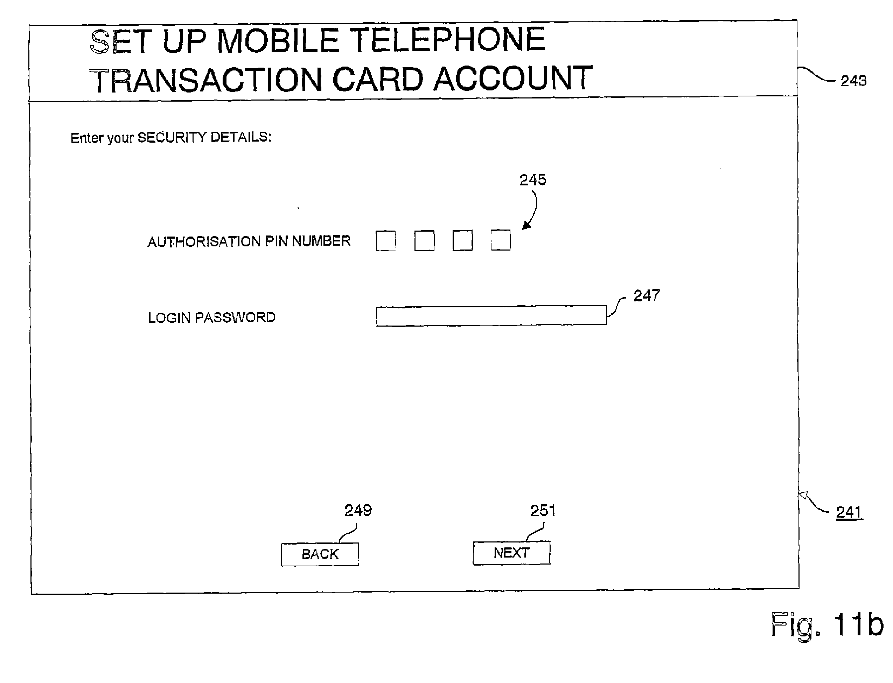

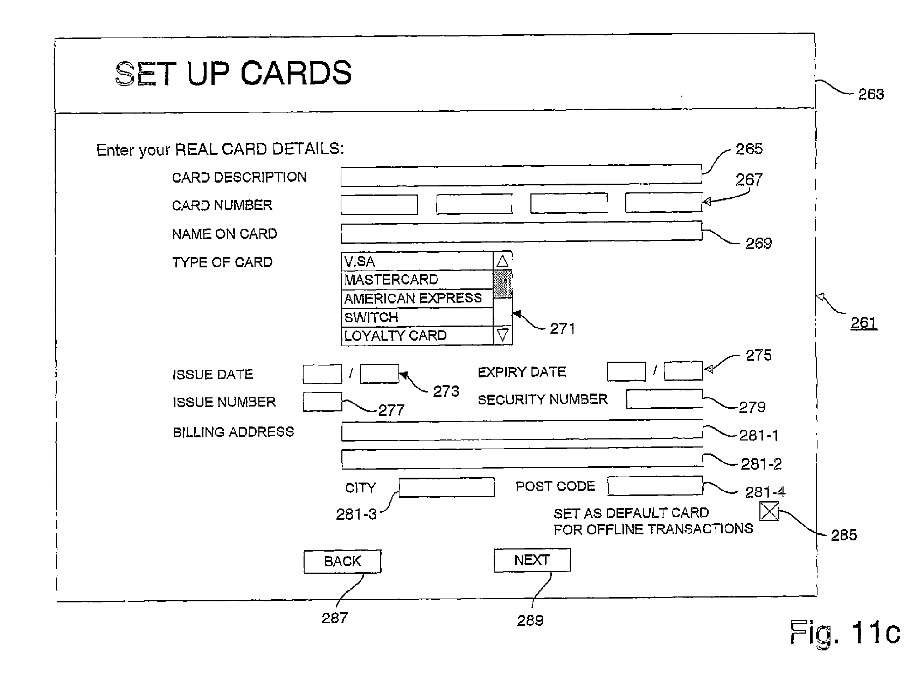

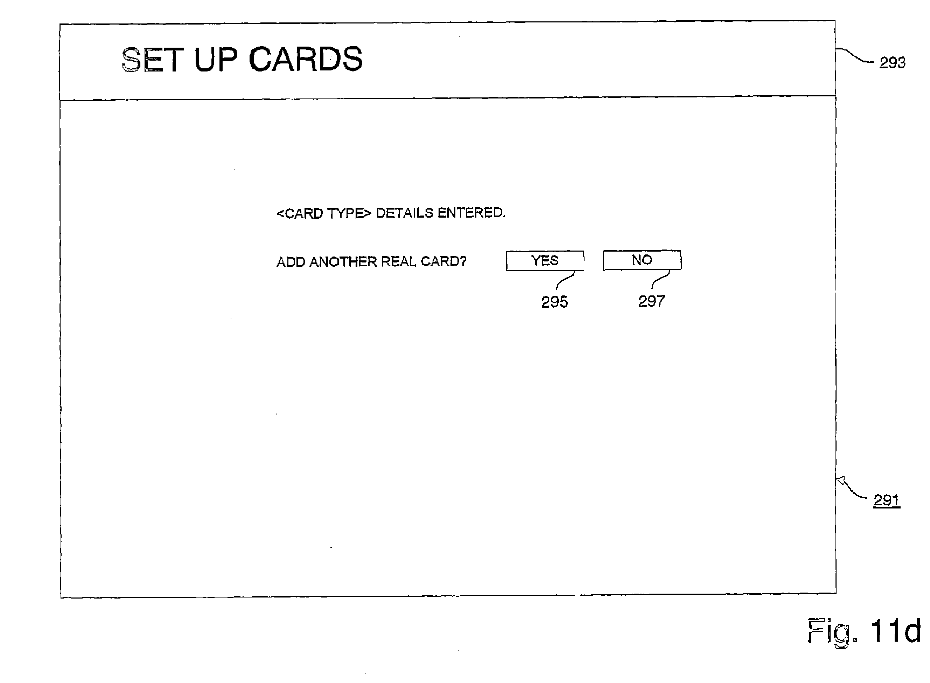

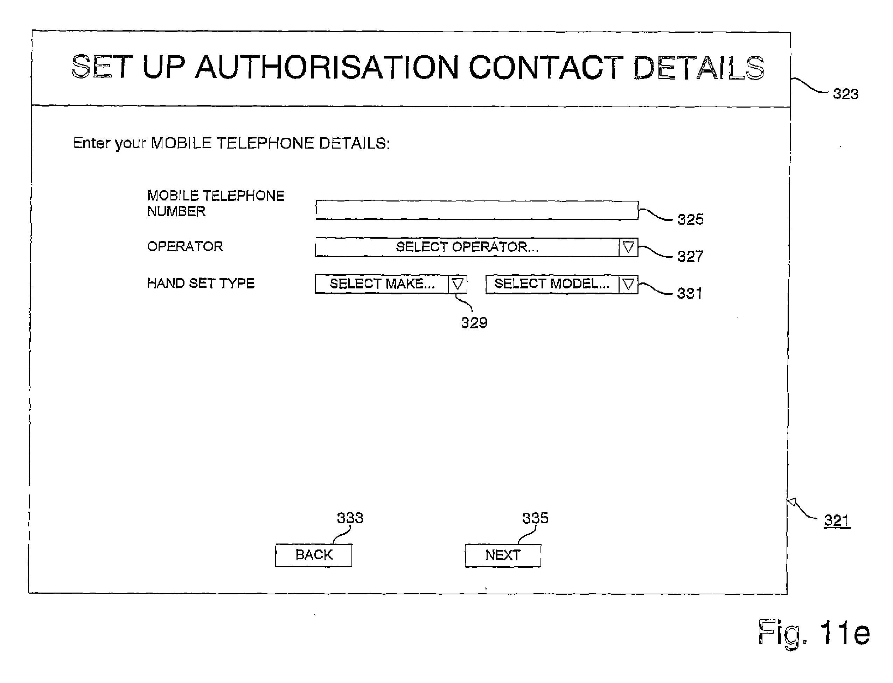

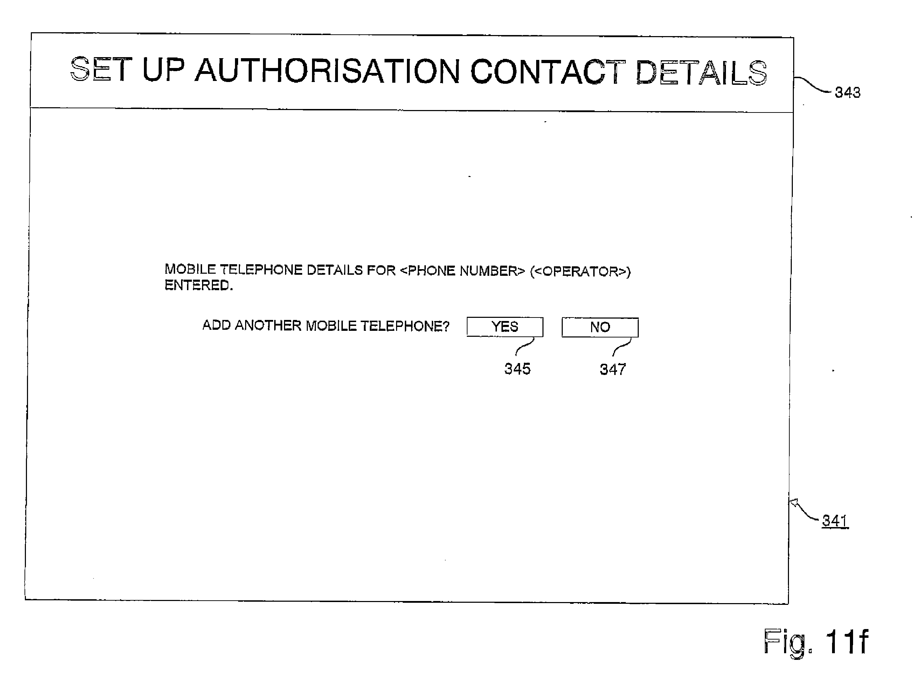

As discussed above, the user is issued with a Mobile Telephone Transaction Card (MTTC) 11 with a unique card number 13 by the MTTC Issuer Server 7. The user then creates their user account on the MTTC Issuer Server 7 via the user account management unit 79 and the Internet 78. As discussed above, the entered user account details are stored in the user details data store 85. The way in which user account management operates in this embodiment will now be described with reference to Figures 10 and 11.

Referring to Figure 10, the Internet enabled computing environment which enables users to set up and manage their mobile transaction user account comprises a user terminal 201 and the MTTC Issuer Server 7. Attached to the user terminal 201 is a monitor 203 for displaying data to the user, a keyboard 205 and a mouse 207 which provide a user interface to the user terminal 201 and a modem 209 for providing a communications link with the MTTC issuer server 7 via the Internet 78.

When the user initially logs on to the MTTC Issuer server 7, the user account management unit 79 generates the setup web page 221 shown in Figure 11a. As shown, this setup web page 221 includes a text box 225 for entering the MTTC number 13 that is marked on their MTTC card 11, a text box 227 for the user's name and text boxes 229-1 to 229-4 for the user's billing address. As discussed above, the MTTC card number 13 has the same form as a typical credit or debit card number having 16 digits.

After the user has entered their personal details as prompted on display screen 221, the user clicks the "Next" button 235 provided toward the bottom of the page which results in the user entered details being transmitted 211 back to the MTTC Issuer Server 7 via the Internet 78 and received by the User Account Management Unit 79 via the Internet interface unit 77. The User Account Management Unit 79 retrieves the user account details 85-1 corresponding to the user entered card number 13 from the user details data store 85. As will be appreciated, the account number 83-3 is generated automatically when the MTTC card 11 is issued, and no account details are initially stored in the account details 85-1 for the associated account.

The User Account Management Unit 79 then stores the user entered name and the billing address in the user account details data store 85. In particular, the user's name, entered in text box 227, and the user's billing address, entered in text boxes 229-1 to 229-4, are stored in the fields 85-5 and 85-7 respectively of the user account details 85-1. The MTTC Issuer Server 7 then sends a second account set-up web page 241 shown in Figure 11b. As shown, the web page 241 also includes a header "Set Up Mobile Telephone Transaction Card Account" 243, and a prompt to the user to enter his or her security details, including text boxes 245 and 247 for the user to enter an authorisation PIN number and a login password. In this embodiment, the authorisation PIN comprises four digits and the login password comprises a sequence of letters.

The display screen 241 also includes a button "Back" 249 which allows the user to view and change the previously displayed screen 221 to, for example, modify the personal details entered in the previous screen. Alternatively, after the user has entered their PIN and password, the user can press the "Next" button 251, which causes the user entered data to be transmitted back to the MTTC Issuer Server 7 via the Internet 78. The received user entered PIN and password are then stored as the user's PIN number 85-9 and security password 85-11 in the user account details 85-1. MTTC Issuer Server 7 then sends data for the next setup web page 261 which is shown in Figure 11c. As shown, the web page 261 includes a header "Set Up Cards" 263 and a prompt for the user to enter his or her card details for a first of the user's cards, for example, a credit card or debit card as described above.

As shown, the display screen 261 includes text input boxes 265, 267 and 269 for the user to enter a card description, the card number and the name of the card holder respectively. A list of card types 271 is also displayed so that the user can select the type of card which has been entered, for example, Visa card, MasterCard, American Express card, Switch card etc. Input text boxes 273, 275, 277, 279 and 281 are also provided for the user to enter the card's issue date, expiry date, issue number (if available), the card security number (which is usually printed on the back of the card) and the card holder's billing address including the city and postcode. The user can also select, using the check box 285, whether the present card is to be used as the default card for "offline" transactions as described above.

The display screen 261 also includes a "Back" button 287 which allows the user to view the previously displayed screen 241 so that the user can modify, if necessary, any of the previously entered details. Alternatively, if the user has entered all of the card details for the present card, the user presses the "Next" button 289 and the user entered card details are transmitted back to the MTTC Issuer Server 7 via the Internet 78.

The user entered card details are received by the User Account Management Unit 79 via the Internet interface unit 77, and the received card details are stored as a first card in card details 85-C1 in the user details data store 85. Data for the next set-up web page 291 shown in Figure 11d is then sent to the user terminal 201 for display to the user own the display 203. As shown, the web page 291 also includes a header "Set Up Cards" 293 and displays a confirmation that the user entered card details have been stored in the Mobile Telephone Transaction Card Issuer Server 7. The user is also asked if there are any more card details to be entered. If the user clicks on the "Yes" button 295, then the user account management unit 79 receives the user choice to add another card, and sends data back to the user terminal 201 to display web page 261 again, prompting the user for the details of the other card.

If, on the other hand, the user clicks on the "No" button 297, then the user account management unit 79 sends data for the next account setup web page 321 shown in Figure 11e for display to the user on display 203. As shown, the web page 321 includes a header "Set Up Authorisation Contact Details" 323 and a prompt for the user to enter their mobile telephone details. An input text box 325 is provided for the user to enter a mobile telephone number, and pop-up menus are provided for the user to select the mobile telephone operator 327 associated with the mobile telephone number and the make 329 and model 331 of the mobile telephone handset 19.

The web page 321 also includes a "Back" button 333 which allows the user to view the previously displayed screen 291 so that the user can enter further card details if necessary. The web page 321 also includes a "next" button 335 that the user can click on after they have entered their mobile telephone details which results in the user entered mobile telephone details to be transmitted back to the MTTC Issuer Server 7 and stored as mobile telephone details 85-15 in the user details data store 85. Data for the next web page 341 shown in Figure 11f is then sent to the user terminal 201 for display to the user on the display 203. As shown, the web page 341 also includes a header "Set Up Authorisation Contact Details" 343 and displays confirmation to the user that the mobile telephone details entered on the previous web page 321 have been stored in the user details data store 85. The user is also asked if they wish to add another mobile telephone. If the user clicks on the "Yes" button 345, then the user's selection is transmitted back to the user account management unit 79 and data for previous web page 321 is transmitted back to the user terminal 201 for display to the user on the display 203, in order to prompt the user to enter details for the next mobile telephone.

If, on the other hand, the user clicks the "No" button 347, then the user's selection is transmitted back to the user account management unit 79 which then transmits data to the user terminal 201 for display to the user on the display 203 confirming that the user's account details 85-1 have successfully been stored in the user details data store 85 and that the user's account is now set up and ready for use in a transaction operation. At the same time, the mobile telephone interface unit 75 sends the mobile transaction authentication module 107 and the transaction validation code generator module 109 to the users mobile telephone(s) 19 so that it can operate in a transaction system.

### Summary and Advantages

A description of the components of a secure transaction system embodying the present invention has been given. A detailed description has also been given of the functional operation of each component during a transaction in the secure transaction system. A number of advantages are achieved with the transaction system described above. As mentioned above, the card details of the MTTC are useless to a third party who has fraudulently obtained the card details (unless they also obtain the user's mobile telephone and secret PIN and password). Additionally, the user is prompted to authenticate and authorise every transaction before the transaction will be authorised by the credit card issuer, thereby giving peace of mind to the user and the merchant and reducing the chances of fraudulent transactions for the credit card issuer.

The user also has the convenience of only having to carry a single card with them, instead of a number of different credit and debit cards. This also reduces the chances of the user losing or misplacing all or some of their cards, which would allow the credit card details to be used by someone else.

The above described transaction system also has the advantage that the merchant EPOS terminal 3, the merchant acquirer server 5 and the credit card issuer server 7 operate in a conventional manner. The system can therefore be easily incorporated into existing credit and debit card authorisation systems.

### Modifications and Alternative Embodiments

A card transaction system has been described above. As those skilled in the art will appreciate, a number of modifications may be made to the embodiment described above. Some of these modifications will now be described. Other modifications will be apparent to those skilled in the art.

In the first embodiment described above, the MTTC Issuer Server stored user account details which included the details of credit and debit cards registered by the user. As a modification to the above embodiment, in addition to storing credit and debit card details, the MTTC Issuer Server may also store details of loyalty cards together with user preferences as to which credit and debit cards and which loyalty cards are to be used with different merchants. In such an embodiment, the MTTC Issuer Server would ensure that the user's loyalty card details are returned to the merchant's EPOS terminal when the authorisation is provided for the current transaction.

In such an alternative embodiment, the preferences that the user can specify may include preferences of using certain cards for certain retailers and/or preferences for using different cards depending on the value of the transaction. For example, the user may specify to use a certain credit card for all transactions over a certain value. In such an embodiment, the MTTC Issuer Server would compare the user defined preferences with the transaction details and select the card based on the user's preferences. However, the user could still be given the opportunity to change this selection during the communication between the MTTC Issuer Server and the user's mobile telephone.

In the above embodiment, the MTTC Issuer Server sent all of the credit and debit card details to the user's mobile telephone in order that the user can select the card to be used for the current transaction. In an alternative embodiment, the MTTC Issuer Server may use the details of the merchant contained in the authorisation request to filter out the credit and debit cards that the MTTC Issuer server knows that the merchant will not accept. In this way, the user is only provided with a list of credit and debit cards that the user can use with the current merchant.

In the embodiment described above, the terminals and servers communicate with one another via a direct dial telephone link. However, instead, the terminals may be connected together via the Internet, a local area network (LAN), a wireless LAN or a wide area network (WAN). In addition, it is possible that the terminals and servers could perform a so-called "tunnelling" operation to create a Virtual Private Network (VPN) between the terminals and servers across the Internet.

In the embodiments described above, the user and the MTTC card are at a point of sale terminal in a physical shop. However, instead, the user may use the MTTC card to perform a transaction with a remote merchant via the Internet. In this case, the merchant's EPOS terminal does not receive the user's card number by inserting the MTTC into a card reader. Instead, after the user has logged on to the merchant's web site server, selected the goods or services to be purchased, pressed a button or link to proceed with the "checkout" and entered their MTTC card number, the transaction details and the user entered card number are then transmitted to an EPOS module, for example, on the merchant's web site server. The EPOS module then processes the received transaction details and card number to generate an authorisation request as described above with reference to the flow diagram shown in Figure 8. Thereafter, the EPOS module will receive the authorisation signal and transmit the authorisation signal to the merchant' s web site server, which will then display an appropriate authorisation message to the user to complete the transaction. The operation of the MTTC issuer server and the user's mobile telephone will be the same as in the first embodiment.

In the embodiments described above, the EPOS Terminal, the MTTC Issuer Server and the Credit Card Issuer Server all communicate with the same Merchant Acquirer Server. However, instead, one or all of these terminals and servers may be able to communicate with several different Merchant Acquirer Servers. For example, the MTTC issuer server may use a different MA server for the shadow transaction request than the one used for the original request.

In the embodiments described above, the data communicated between terminals and servers within the electronic transaction system is encrypted and decrypted. As the skilled person will appreciate, the data may not need to be encrypted if the terminals and servers communicate electronically with one another via secure data channels. Alternatively, only selected data may be encrypted, for example, data which includes the user's credit card number and details.

In the embodiments described above, look-up tables (LUT) are used to store ID numbers of known card issuers along with the corresponding card issuer details and a list of user ID numbers and the corresponding account numbers. As the skilled person will appreciate, this data does not need to be stored in a look-up table, and instead, may be stored using another data structure such as, for example, a list or a hash table.

In the embodiments described above, a mobile transaction authentication module (stored in the mobile telephone) is triggered when a message is received from the MTTC Issuer Server. However, instead, the received mobile telephone message, may include a user-selectable link to a web page stored on the MTTC Server. In this case, the user can provide authorisation for the transaction using, for example, a web browser stored in their mobile telephone and the mobile telephone does not need to store any additional software modules.

In the embodiments described above, the users transaction history data store stores a separate transaction history table for each of the users. However, instead, the transaction history details for all of the users may be stored in a single table. In this case, the user ID number or account number would be stored along with the transaction details to identify a transaction with its corresponding user. In addition, the MTTC Issuer Server may also include a completed transactions history data store for storing transaction history details for both successful and unsuccessful transactions such that the user's transaction history table only stores transaction details for the pending transactions.

In the "offline" case described above an offline authorisation code is displayed by the EPOS terminal and entered manually by the user into their mobile telephone. The mobile telephone then generates and displays a validation code which the user manually enters into the EPOS terminal. As the skilled person will appreciate, the codes may, instead, be communicated between the EPOS terminal and the mobile telephone automatically, via, for example, an infrared connection, a blue tooth connection or a physical cable connecting the terminal and the mobile telephone.

In the embodiments described above, a transaction fails immediately upon receipt of a card decline code from a Credit Card Issuer Server. However, instead, the MTTC Issuer Server may be operable to determine if the user has another card which can be used to complete the transaction and if they have, then to generate another shadow transaction for the other card.

In the embodiments described above, when user authorisation is requested in an offline manner, the user is not able to select a specific card to use in the transaction. However, it is possible to store, in the user's mobile telephone, a list of the card descriptions from which the user may select one. In this case, the validation code which is generated by the user's mobile telephone may include data identifying the user's selected card so that the user's selection is transmitted to the MTTC Issuer Server.

In the embodiment described above, the user connects to the MTTC Issuer Server via the Internet to create or modify his or her account details. However, instead, an operator at the MTTC Issuer Server may speak to the user over the telephone and then enter the details into the account setup web pages in order to set up the account details on behalf of the user.

In the above embodiments, the merchant EPOS terminal is arranged to communication with a merchant acquirer server and then with the MTTC issuer server. In an alternative embodiment, the EPOS terminal may be arranged to communicate directly with the MTTC issuer server. In this case, the merchant EPOS terminal may have to be programmed with new software to operate with the MTTC issuer server.

In the above embodiment, the MTTC issuer server generated a shadow authorisation request for each authorisation request received from the MA server. As the skilled person will appreciate, in an alternative embodiment, the MTTC issuer server may be arranged to authorise some requests without generating a shadow authorisation request. For example, if the value of the transaction is below a threshold and the user's credit card has not been "black-listed", then the MTTC issuer server may decide to authorise the transaction without the delay in seeking authorisation from the credit card issuer server.

In the above embodiment, the user was contacted on a mobile telephone to confirm authorisation for the transaction. As the skilled person will appreciate, other mobile telecommunication devices such as personal digital assistants, laptops etc. can be used. Additionally, the system can also be adapted to work with PCs, interactive Television systems and landline telephones, provided a separate communications path is available between the user's device and the MTTC issuer server, so that user authorisation can be provided independent of the merchant.

Modern telecommunication networks are able to approximately identify the location of the mobile telephone. When such networks are used, this location information may also be provided to the MTTC issuer server which can then compare the mobile telephone's location with the known location of the merchant EPOS terminal. The MTTC issuer server can therefore use this mobile telephone location information as a further check to ensure that the user is approximately at the merchant EPOS terminal.

In the above embodiment, the MTTC issuer server transmitted a text message to the user's mobile telephone. This may be achieved using, for example, the short messaging service (SMS) or using the unstructured supplementary services data (USSD) defined in the GSM standard. Whilst USSD is similar to SMS in that both use the GSM network signalling path, USSD messages are guaranteed to be sent and received immediately by the mobile telephone. At present, however, the mobile network operators are only able to send USSD messages. Therefore, in such an embodiment, the MTTC issuer server would have to request the mobile network operator to send the message.

In the above embodiment, during an offline authorisation operation, the MTTC issuer server generates an offline authorisation code which is sent to the MA server, and the MTTC issuer server then waits for the user entered validation code to be sent back from the MA server. As the skilled person will appreciate, the MTTC issuer server may be arranged to wait for a predetermined time period and to determine that a transaction has failed if no validation code is received from the user in the predetermined time period.

In the above embodiments, the merchant details which are stored in the memory of the EPOS terminal included details identifying the merchant's name. As the skilled person will appreciate, the merchant details may instead include merchant ID data and the MTTC issuer server may then be arranged to store merchant ID data for all of the known merchants together with the associated name of the merchant in a database. In this case, when the MTTC issuer server receives an authorisation request (including the merchant ID data), the MTTC server can use the merchant ID data to identify the name of the merchant so that the mobile telephone message which is sent to the user's mobile telephone includes the name of the merchant.

In the above embodiments, the user is first issued with a MTTC card having a unique card number, and the user then creates their user account on the MTTC issuer server. However, instead, the user may first log on to the MTTC issuer server and enter their details to create a user account on the MTTC issuer server. In this case, the MTTC issuer server may be arranged to assign a MTTC card number to the user after the user has input their user details, and to then issue the user with their MTTC card which includes the assigned card number.

In the above embodiment, the MTTC issuer server stored user account details for each user which included mobile telephone details, credit card details, user details etc. As the skilled person will appreciate, it is not essential to store all of this information. For example, in a simpler embodiment, the MTTC issuer server may only store the mobile telephone number and the credit card number for the user.

In the above embodiment, the EPOS terminal stored and transmitted transaction details which included, for example, the price and quantity of the goods and a calculated total cost of the transaction. As the skilled person will appreciate, it is not essential to store all of this information. For example, in a simpler embodiment, the EPOS terminal may only store and transmit the total cost of the transaction.

In the embodiments described above, the user purchasing the goods was the same as the user who owns the credit cards and who is registered with the MTTC server. In an alternative embodiment, the user who actually purchases the goods may be different from the user who is registered with the MTTC server. For example, the MTTC card may be given to a child or trusted third party for use in paying for goods or services. In this case, when the child or trusted third party uses the card, the registered owner will receive the authorisation request from the MTTC server. They can then choose to authorise or decline authorisation for the transaction.

In the above embodiments, when the MTTC issuer server contacted the user's mobile telephone, it transmitted a text message or used some other data message. Alternatively, the MTTC issuer server may set up a voice call to the user's mobile telephone. In this case, the user can provide the authorisation verbally to a human operator or a speech recognition system or can provide authorisation using standard DTMF touch tones in response to an automated dialogue system.

In the above embodiments, the MTTC issuer server initiated communications with the user's mobile telephone in response to receiving an authorisation request for a transaction. In an alternative embodiment, the user may contact the MTTC server directly whilst the merchant is entering the transaction details into their EPOS terminal. For example, the user may send a text message to the MTTC issuer server confirming the merchant details, the transaction details and their authorisation for the transaction. The MTTC issuer server would then use the stored mobile telephone number to identify the user who has transmitted the message (which will also include the user's mobile telephone number). When the MTTC issuer server receives the authorisation request from the MA server, it uses the user ID data in the received request, to identify the user making the purchase and then it compares the merchant details and transaction details in the communication received from the user with the corresponding details from the authorisation request received from the MA server, in order to verify the user's authorisation.

In the first embodiment, the user verified their authorisation for the transaction by entering their PIN number and selected letters from their password. As the skilled person will appreciate, it is not essential to do this. Authorisation may be given simply by the user responding to the message received from the MTTC issuer server. Alternatively, other more secure user verification techniques may be used, for example using biometric data such as data from a voice scan, finger print scan, iris scan etc.

In the first embodiment the MTTC issuer server transmitted a single text message to the user requesting authorisation for the transaction. This initiated a software module in the mobile telephone which used the data in the received text message to prompt the user to authorise the transaction. As the skilled person will appreciate, a simpler embodiment may be provided in which multiple text messages are transmitted between the user's mobile telephone and the MTTC issuer server. For example, the MTTC issuer server may transmit a message for each of the prompt screens discussed above in the first embodiment, with the user transmitting a response text message back to the MTTC issuer server. However, this is not preferred because of the latency involved in transmitting text messages and because of their transmission reliability.

In the above embodiment, the MTTC is a "valueless" card in that it cannot be used directly to pay for the goods or services other than through the payment system described above. As the skilled person will appreciate, it is not essential for the MTTC to be a "valueless" card. For example, the MTTC card issuer may be able to provide credit facilities for the users or it may be able to debit a user's account with the appropriate funds for the current transaction. In this case, the MTTC issuer server would also perform the functions of a credit or debit card issuer server. In such an embodiment, the MTTC issuer server would preferably still include the details of the user's other credit and debit cards so that the user can select an alternative card to be used for a current transaction.

In the above embodiments, the user is provided with a valueless card having card issuer data and user ID data. As the skilled person will appreciate, it is not essential to employ such a card. For example, the card issuer ID data and the user's ID data may be input to the merchant's EPOS terminal directly via the keypad.

Alternatively, this data may be stored in the user's mobile telephone and then read from the user's mobile telephone by the EPOS terminal.

In the above embodiments, the transaction system included a mobile telephone, a merchant's EPOS terminal, a MA server, a MTTC issuer server and a card issuer server. Each of these components may be formed from computer hardware circuits or from general purpose programmable processing devices together with processor executable instructions for configuring the programmable processing devices to operate in the above way.

The invention may be embodied according the following numbered clauses:
1. An electronic transaction system comprising;
   a merchant terminal associated with a merchant who provides goods or services and comprising;
   i) first input means for receiving details of a transaction;
   ii) second input means for receiving user identification data for a user associated with the transaction; and
   iii) means for transmitting an authorisation request for the transaction, the request including said transaction details and said user identification data; and
   a transaction server operable to receive the authorisation request and comprising;
   i) means for storing, for each user, user account details associated with user identification data, the user account details comprising one or more mobile communications device numbers associated with the user;
   ii) means for using the user identification data in the received authorisation request to retrieve a stored mobile communications device number for the user associated with the transaction from said stored user account details;
   iii) means for transmitting a communication for authorisation of the transaction to the user's mobile communications device using the retrieved mobile communications device number;
   iv) means for receiving authorisation for the transaction from the user; and
   v) means for transmitting an authorisation signal for the transaction; and
   wherein the merchant terminal further comprises;
   iv) means for receiving the authorisation signal for the transaction; and
   v) means for outputting an indication that the transaction has been authorised.
2. A system according to clause 1, wherein said second input means of the merchant terminal is operable to receive transaction server identification data and wherein said transaction server identification data is used to cause the authorisation request to be transmitted to the transaction server.
3. A system according to clause 1 or 2, further comprising a merchant acquirer server operable to receive authorisation requests transmitted by said merchant terminal and operable to transmit received authorisation requests to said transaction server.
4. A system according to clause 3, wherein the authorisation request includes transaction server identification data and wherein the merchant acquirer server comprises:
   i) means for storing transaction server details associated with transaction server identification data;
   ii) means for using transaction server identification data in a received authorisation request to retrieve the stored transaction server details associated with the transaction; and
   iii) means for transmitting the authorisation request to the transaction server using the retrieved transaction server details.
5. A system according to clause 4, wherein the merchant acquirer server further comprises:
   iv) means for receiving an authorisation signal from the transaction server; and
   v) means for transmitting the authorisation signal to the merchant terminal.
6. A system according to any preceding clause, wherein said authorisation request is a first authorisation request, wherein said stored user account details associated with the user identification data further comprises details of at least one credit or debit card associated with the user, wherein said transaction server further comprises:
   vi) means for using the user identification data in the first authorisation request to retrieve the credit or debit card details for one of the user's credit or debit cards from said stored user account details;
   vii) means for generating a second authorisation request using the transaction details from the first authorisation request and the retrieved credit or debit card details;
   viii) means for transmitting the second authorisation request to cause the transaction to be made on said one of the user's credit or debit cards; and
   ix) means for receiving an authorisation signal for the second authorisation request;
      and wherein said transaction server is operable to transmit said authorisation signal for the first authorisation request in dependence upon the received authorisation signal for the second authorisation request.
7. A system according to clause 6, wherein said transaction server is operable to transmit said second authorisation request to a merchant acquirer server and to receive the authorisation signal for the second authorisation request from said merchant acquirer server.
8. A system according to clause 7, wherein said transaction server is arranged to receive said first authorisation request from and to transmit the second authorisation request to the same merchant acquirer server.
9. A system according to clause 7, wherein said transaction server is arranged to receive said first authorisation request from and to transmit said second authorisation request to different merchant acquirer servers.
10. A system according to any of clauses 6 to 9, further comprising a card issuer server operable to receive the second authorisation request, operable to authorise the transaction defined by the second authorisation request and operable to output said authorisation signal for the second authorisation request.
11. A system according to any preceding clause, wherein said mobile communications device comprises :
   i) means for receiving a communication for authorisation of the transaction;
   ii) means responsive to a received communication for authorisation to prompt the user to authorise the transaction;
   iii) means for receiving the user's input authorisation; and
   iv) means for transmitting an authorisation communication to the transaction server.
12. A system according to clause 11, wherein said transaction server is operable to transmit said authorisation signal in dependence upon the authorisation communication received from the user's mobile communications device.
13. A system according to clause 11 or 12, wherein said transaction server is operable to transmit a text communication to said user's mobile communications device.
14. A system according to any of clauses 11 to 13, wherein said mobile communications device is operable to transmit said authorisation communication as a text communication to said transaction server.
15. A system according to any of clauses 11 to 14, wherein said mobile communications device comprises a software module having said receiving means, prompting means, input means and transmitting means, which software module is initiated upon receipt of said authorisation communication received from said transaction server.
16. A system according to any of clauses 11 to 14, wherein said mobile communications device comprises a web browser which is operable to connect to said transaction server in response to receiving said communication for authorisation from said transaction server.
17. A system according to any of clauses 11 to 16, wherein said communication for authorisation transmitted to the user's mobile communications device includes details of two or more of the user's credit or debit cards and wherein the user's mobile communications device further comprises:
   v) means for prompting the user to select one of the credit or debit cards identified in the received communications request;
   vi) means for receiving a user's credit or debit card selection; and
   vii) means for transmitting data identifying the user's credit or debit card selection to the transaction server.
18. A system according to clause 17, wherein said user's mobile communications device further comprises:
   viii) means for generating an authorisation communication, the authorisation communication including the transaction details, data indicative of the user's authorisation for the transaction and data identifying the user's selected credit or debit card;
      and wherein the user's mobile communications device is operable to transmit the generated authorisation communication to the transaction server.
19. A system according to any preceding clause, wherein if said user does not authorise said transaction, said transaction server is operable to transmit an authorisation failure message for the transaction.
20. A system according to clause 6 or any clause dependent thereon, wherein if said second authorisation request is not authorised, said transaction server is operable to transmit an authorisation failure message.
21. A system according to clause 19 or 20, wherein the merchant terminal further comprises:
   vi) means for receiving an authorisation failure message for the transaction; and
   vii) means for outputting an indication that the transaction has not been authorised to the merchant.
22. A system according to any preceding clause, wherein said merchant terminal is operable to print an indication as to whether or not the transaction has been authorised.
23. A system according to any preceding clause, wherein said transaction server further comprises:
   x) means for determining if the user's mobile communications device is connected to a mobile communications network;
   xi) means for generating an offline authorisation code for the authorisation request if said determining means determines that the user's mobile communications device is not connected to said mobile communications network; and
   xii) means for transmitting the offline authorisation code;
   and wherein the merchant terminal further comprises:
   viii) means for receiving said offline authorisation code;
   ix) means for outputting said offline authorisation code to the user;
   x) means for receiving a validation code for the transaction from the user; and
   xi) means for transmitting the validation code for the transaction;
   and wherein said transaction server further comprises:
   xiii) means for receiving the validation code for the transaction; and
   xiv) means for verifying that the received validation code is valid;
   and wherein said transaction server is operable to transmit said authorisation signal if said verifying means verifies that the received validation code is valid.
24. A system according to clause 23, wherein said transaction server is operable to transmit an authorisation failed signal if said verifying means does not verify the validation code.
25. A system according to clause 23 or 24, wherein said mobile communications device is operable to generate said validation code using said authorisation code output by said merchant terminal and data input by said user.
26. A system according to any preceding clause, wherein the transaction server further comprises:
   xv) means for determining if a current user's mobile communications device is connected to the mobile communications network;
   xvi) means for retrieving a second mobile communications device number for a user's second mobile communications device if said determining means determines that the mobile communications device is not connected to said mobile communications network; and
   xvii) means for sending a second communication for authorisation of the transaction to the user's second mobile communications device using the retrieved second mobile communications number.
27. A system according to any preceding clause, further comprising a user's transaction card associated with the transaction server, the user's transaction card including the user identification data.
28. A system according to clause 27, wherein said second input means of said merchant terminal comprises a card reader operable to receive said user's transaction card and operable to read said user identification data from said card.
29. A system according to any preceding clause, wherein said mobile communications device comprises a mobile telephone.
30. A system according to any preceding clause, wherein said merchant terminal further comprises means for encrypting the authorisation request for the transaction and wherein said transaction server comprises means for decrypting the encrypted authorisation request.
31. A transaction server for use in an electronic transaction system by one or more users, the server comprising:
   i) means for storing, for the one or more users, user account details associated with user identification data, the user account details including one or more mobile communications device numbers associated with the user;
   ii) means for receiving an authorisation request for a transaction between a merchant and a user, the authorisation request including details of the transaction and user identification data for the user associated with the transaction;
   iii) means for using the user identification data in the received authorisation request to retrieve the stored mobile communications device number for the user associated with the transaction from said stored user account details ;
   iv) means for transmitting a communication for authorisation of the transaction to the user's mobile communications device using the retrieved mobile communications device number;
   v) means for receiving authorisation for the transaction from the user; and
   vi) means for transmitting an authorisation signal for the transaction.
32. A transaction server according to clause 31, wherein said authorisation request is a first authorisation request, wherein said stored user account details associated with the user identification data further comprises details of at least one credit or debit card associated with the user, wherein said transaction server further comprises:
   vii) means for using the user identification data in the first authorisation request to retrieve the credit or debit card details for one of the user's credit or debit cards from said stored user account details;
   viii) means for generating a second authorisation request using the transaction details from the first authorisation request and the retrieved credit or debit card details;
   ix) means for transmitting the second authorisation request to cause the transaction to be made on said one of the user's credit or debit cards; and
   x) means for receiving an authorisation signal for the second authorisation request;
   and wherein said transaction server is operable to transmit said authorisation signal for the first authorisation request in dependence upon the received authorisation signal for the second authorisation request.
33. A transaction server according to clause 32, operable to transmit said second authorisation request to a merchant acquirer server and to receive the authorisation signal for the second authorisation request from said merchant acquirer server.
34. A transaction server according to clause 33, arranged to receive said first authorisation request from and to transmit the second authorisation request to the same merchant acquirer server.
35. A transaction server according to clause 33, arranged to receive said first authorisation request from and to transmit said second authorisation request to different merchant acquirer servers.
36. A transaction server according to any of clauses 31 to 35, operable to transmit said authorisation signal in dependence upon an authorisation communication received from the user's mobile communications device.
37. A transaction server according to clause 36, operable to transmit a text communication to said user's mobile communications device.
38. A transaction server according to any of clauses 31 to 37, wherein if said user does not authorise said transaction, said transaction server is operable to transmit an authorisation failure message for the transaction.
39. A transaction server according to clause 32 or any clause dependent thereon, wherein if said second authorisation request is not authorised, said transaction server is operable to transmit an authorisation failure message.
40. A transaction server according to any of clauses 31 to 39, further comprising:
   xi) means for determining if the user's mobile communications device is connected to a mobile communications network;
   xii) means for generating an offline authorisation code for the authorisation request if said determining means determines that the user's mobile communications device is not connected to said mobile communications network;
   xiii) means for transmitting the offline authorisation code; xiv) means for receiving a validation code for the transaction; and
   xv) means for verifying that the received validation code is valid;
   and wherein said transaction server is operable to transmit said authorisation signal if said verifying means verifies that the received validation code is valid.
41. A transaction server according to clause 40, operable to transmit an authorisation failed signal if said verifying means does not verify the validation code.
42. A transaction server according to any of clauses 31 to 41, further comprising:
   xvi) means for determining if a current user's mobile communications device is connected to the mobile communications network;
   xvii) means for retrieving a second mobile communications device number for a user's second mobile communications device if said determining means determines that the mobile communications device is not connected to said mobile communications network; and
   xviii) means for-sending a second communication for authorisation of the transaction to the user's second mobile communications device using the retrieved second mobile communications number.
43. A mobile telephone associated with a user, comprising:
   i) means for receiving a communication for authorisation of a transaction, the communication including details of the transaction;
   ii) means for outputting the transaction details in the received authorisation communication and for prompting the user to authorise the transaction details;
   iii) means for receiving a user's input authorising or declining the transaction; and
   iv) means for transmitting an authorisation communication in dependence upon the received user's input.
44. A mobile telephone according to clause 43, operable to transmit said authorisation communication as a text communication to a remote transaction server.
45. A mobile telephone according to clause 43 or clause 44, further comprising a software module having said receiving means, outputting means, input means and transmitting means, which software module is initiated upon receipt of said authorisation communication.
46. A mobile telephone according to clause 43 or clause 44, further comprising a web browser which is operable to connect to a remote transaction server in response to receiving said communication for authorisation from said transaction server.
47. A mobile telephone according to any of clauses 43 to 46, wherein said received communication for authorisation includes details of two or more of the user's credit or debit cards and wherein the mobile telephone further comprises:
   v) means for prompting the user to select one of the credit or debit cards;
   vii) means for receiving-a user's credit or debit card selection; and
   viii) means for transmitting the user's credit or debit card selection.
48. A mobile telephone according to clause 47, further comprising:
   ix) means for generating an authorisation communication, the authorisation communication including data identifying the transaction, data indicative of the user's
   authorisation for the transaction and data identifying the user's selected credit or debit card;
   and wherein the user's mobile communications device is operable to transmit the generated authorisation message to a remote transaction server.
49. A mobile telephone according to any of clauses 43 to 48, further comprising:
   ix) means for receiving an offline authorisation code;
   x) means for generating a validation code using said received authorisation code and data input by said user; and
   xi) means for outputting said generated validation code.
50. An electronic transaction method in a transaction system comprising a merchant terminal associated with a merchant who provides goods or services to a user and a transaction server which stores, for each user, user account details associated with user identification data, the user account details comprising one or more mobile communications device numbers associated with the user, the method comprising the steps of:
   in the merchant terminal:
      i) receiving details of a transaction between the associated merchant and the user;
      ii) receiving user identification data for the user; and
      iii) transmitting an authorisation request for the transaction, the request including said transaction details and said user identification data; and
   in the transaction server:
      i) receiving the authorisation request;
      ii) using the user identification data in the received authorisation request to retrieve a stored mobile communications device number for the user associated with the transaction from the stored user account details;
      iii) transmitting a communication for authorisation of the transaction to the user's mobile communications device using the retrieved mobile communications device number;
      iv) receiving authorisation for the transaction from the user; and
      v) transmitting an authorisation signal for the transaction;
      and wherein the method further comprises the steps of:
      in the merchant terminal:
         iv) receiving the authorisation signal for the transaction; and
         v) outputting an indication that the transaction has been authorised.
51. A method according to clause 50, wherein said step of receiving user identification data in the merchant terminal comprises receiving transaction server identification data and wherein said transaction server identification data is used to cause the authorisation request to be transmitted to the transaction server.
52. A method according to clause 50 or 51, further comprising the steps of, in a merchant acquirer server, receiving authorisation requests transmitted by said merchant terminal and transmitting received authorisation requests to said transaction server.
53. A method according to clause 52, wherein the authorisation request includes transaction server identification data, wherein the merchant acquirer server stores transaction server details associated with transaction server identification data and wherein the method further comprises the steps of, in said merchant acquirer server:
   i) using transaction server identification data in a received authorisation request to retrieve stored transaction server details associated with the transaction; and
   ii) means for transmitting the authorisation request to the transaction server using the retrieved transaction server details.
54. A method according to clause 53, wherein the method further comprises the steps of, in said merchant acquirer server:
   iii) receiving an authorisation signal from the transaction server; and
   iv) transmitting the authorisation signal to the merchant terminal.
55. A method according to any of clauses 50 to 54, wherein said authorisation request is a first authorisation request, wherein said stored user account details associated with the user identification data further comprises details of at least one credit or debit card associated with the user, wherein the method further comprises the steps of, in said transaction server further:
   vi) using the user identification data in the first authorisation request to retrieve the credit or debit card details for one of the user's credit or debit cards from said stored user account details;
   vii) generating a second authorisation request using the transaction details from the first authorisation request and the retrieved credit or debit card details;
   viii) transmitting the second authorisation request to cause the transaction to be made on said one of the user's credit or debit cards; and
   ix) receiving an authorisation signal for the second authorisation request;
   and wherein in said transaction server, said authorisation signal transmitting step comprises transmitting said authorisation signal for the first authorisation request in dependence upon the received authorisation signal for the second authorisation request.
56. A method according to clause 55, further comprising the steps of, in said transaction server, transmitting said second authorisation request to a merchant acquirer server and receiving the authorisation signal for the second authorisation request from said merchant acquirer server.
57. A method according to clause 56, wherein said transaction server is arranged to receive said first authorisation request from and to transmit the second authorisation request to the same merchant acquirer server.
58. A method according to clause 56, wherein said transaction server is arranged to receive said first authorisation request from and to transmit said second authorisation request to different merchant acquirer servers.
59. A method according to any of clauses 55 to 58, further comprising the steps of, in a card issuer server, receiving the second authorisation request, authorising the transaction defined by the second authorisation request and outputting said authorisation signal for the second authorisation request.
60. A method according to any of clauses 50 to 59, further comprising the steps of, in said mobile
   communications device:
   i) receiving a communication for authorisation of the transaction;
   ii) prompting the user to authorise the transaction in response to receiving a communication for authorisation;
   iii) receiving the user's input authorisation; and
   iv) transmitting an authorisation communication to the transaction server.
61. A method according to clause 60, wherein, said authorisation signal transmitting step in said transaction server comprises transmitting said authorisation signal in dependence upon the authorisation communication received from the user's mobile communications device.
62. A method according to clause 60 or 61, wherein said step of transmitting a communication to the user's mobile communications device in said transaction server comprises transmitting a text communication to said user's mobile communications device.
63. A method according to any of clauses 60 to 62, wherein said step of transmitting an authorisation signal in said mobile communications device comprises transmitting said authorisation communication as a text communication to said transaction server.
64. A method according to any of clauses 60 to 63, wherein said communication for authorisation transmitted to the user's Mobile communications device includes details of two or more of the user's credit or debit cards and wherein the method further comprises, in said user's mobile communications device:
   v) prompting the user to select one of the credit or debit cards identified in the received communications request;
   vi) receiving a user's credit or debit card selection; and
   vii) transmitting data identifying the user's credit or debit card selection to the transaction server.
65. A method according to clause 64, further comprising the steps of, in said user's mobile communications device:
   viii) generating an authorisation communication, the authorisation communication including the transaction details, data indicative of the user's authorisation for the transaction and data identifying the user's selected credit or debit card;
      and wherein said step of transmitting an authorisation signal in said user's mobile communications device comprises transmitting the generated authorisation communication to the transaction server.
66. A method according to any of clauses 50 to 65, further comprising the step of, in said transaction server, transmitting an authorisation failure message for the transaction if said user does not authorise said transaction.
67. A method according to clause 55 or any clause dependent thereon, further comprising the step of, in said transaction server, transmitting an authorisation failure message if said second authorisation request is not authorised.
68. A method according to clause 66 or 67, further comprising the steps of, in said merchant terminal:
   vi) receiving an authorisation failure message for the transaction; and
   vii) outputting an indication that the transaction has not been authorised to the merchant.
69. A method according to any of clauses 50 to 68, wherein said outputting step in said merchant terminal comprises printing an indication as to whether or not the transaction has been authorised.
70. A method according to any of clauses 50 to 69 further comprising the steps of:
   in said transaction server:
      x) determining if the user's mobile communications device is connected to a mobile communications network;
      xi) generating an offline authorisation code for the authorisation request if said determining step determines that the user's mobile communications device is not connected to said mobile communications network; and
      xii) transmitting the offline authorisation code;
      and in said merchant terminal:
      viii) receiving said offline authorisation code;
      ix) means for outputting said offline authorisation code to the user;
      x) receiving a validation code for the transaction from the user; and
      xi) transmitting the validation code for the transaction;
      and wherein the method further comprises the steps of, in said transaction server:
      xiii) receiving the validation code for the transaction; and
      xiv) verifying that the received validation code is valid;
      and wherein said authorisation signal transmitting step in said transaction server comprises transmitting said authorisation signal if said verifying step verifies that the received validation code is valid.
71. A method according to clause 70, further comprising the step of, in said transaction server, transmitting an authorisation failed signal if said verifying step does not verify the validation code.
72. A method according to clause 70 or 71, further comprising the step of, in mobile communications device generating said validation code using said authorisation code output by said merchant terminal and data input by said user.
73. A method according to any of clauses 50 to 72 further comprising the steps of, in said transaction server:
   xv) determining if a current user's mobile communications device is connected to the mobile communications network;
   xvi) retrieving a second mobile communications device number for 9 user's second mobile communications device if said determining step determines that the mobile communications device is not connected to said mobile communications network; and
   xvii) sending a second communication for authorisation of the transaction to the user's second mobile communications device using the retrieved second mobile communications number.
74. A method according to any of clauses 50 to 73, further comprising the steps of, in said merchant terminal, encrypting the authorisation request for the transaction and in said transaction server, decrypting the encrypted authorisation request.
75. A user account management interface associated with a data structure for storing, for each user, details for a user account, the interface comprising:
   i) means for prompting a user for a user's mobile communications device number;
   ii) means for receiving the user's mobile communications device number;
   iii) means for prompting the user for the user's credit or debit card number;
   iv) means for receiving the user's credit or debit card number;
   v) means for generating a user account and storing the received mobile communications device number and the credit or debit card number in the user's account; and
   vi) means for associating the generated user's account with user identification data associated with the user.
76. A user account management interface according to clause 75, further comprising:
   means for prompting the user for the associated user identification data and means for associating the user entered user identification data with the user's account.
77. A user account management interface according to clause 75, further comprising:
   means for generating user identification data and means for associating the generated user identification data with the user's account.
78. A user account management interface according to any of clauses 75 to 77, further comprising:
   means for manufacturing a transaction card and recording the user identification data associated with the user on the transaction card; and
   means for supplying the transaction card to the user.
79. A method of manufacturing a transaction card, the method comprising the steps of:
   i) prompting a user for the user's mobile communications device number;
   ii) receiving the user's mobile communications device number;
   iii) prompting the user for the user's credit or debit card number;
   iv) receiving the user's credit or debit card number;
   v) storing the received mobile communications device number and the credit or debit card number as user's account details;
   vi) generating user identification data;
   vii) associating the generated user identification data with the user's account details; and
   viii) recording the user identification data on the transaction card.
80. An electronic transaction system comprising: a merchant terminal associated with a merchant who provides goods or services and comprising:
   i) first input means for receiving details of a transaction;
   ii) second input means for receiving user identification data for a user associated with the transaction; and
   iii) means for transmitting an authorisation request for the transaction, the request including said transaction details and said user identification data; and
   a transaction server operable to receive the authorisation request and comprising:
   i) means for storing, for each user, user account details associated with user identification data, the user account details comprising one or more mobile communications device numbers associated with the user;
   ii) means for receiving a user authorisation communication from a user's mobile communications device, the user authorisation communication including the user's mobile communications device number;
   iii) means for using the mobile communications device number of the received authorisation communication and the stored user account details to identify the associated user identification data;
   iv) means for using the user identification data to identify the transaction authorisation request corresponding to the received user authorisation communication; and
   v) means for transmitting an authorisation signal for the transaction;
   and wherein the merchant terminal further comprises:
   iv) means for receiving the authorisation signal for the transaction; and
   v) means for outputting an indication that the transaction has been authorised.
81. An electronic transaction system comprising:
   a merchant terminal associated with a merchant who provides goods or services and comprising:
      i) first input means for receiving details of a transaction;
      ii) second input means for receiving user identification data for a user associated with the transaction; and
      iii) means for transmitting an authorisation request for the transaction, the request including said transaction details and said user identification data; and
      a transaction server operable to receive the authorisation request and comprising:
      i) means for storing, for each user, user account details associated with user identification data, the user account details comprising one or more communications addresses associated with the user;
      ii) means for using the user identification data in the received authorisation request to retrieve a stored communications address for the user associated with the transaction from said stored user account details;
      iii) means for transmitting a communication for authorisation of the transaction to a user's device using the retrieved communications address;
      iv) means for receiving authorisation for the transaction from the user; and
      v) means for transmitting an authorisation signal for the transaction;
      and wherein the merchant terminal further comprises:
      iv) means for receiving the authorisation signal for the transaction; and
      v) means for outputting an indication that the transaction has been authorised.
82. A storage medium storing processor implementable instructions for configuring a programmable computer device to become configured as a transaction server according to any of clauses 31 to 42.
83. A storage medium storing processor implementable instructions for configuring a mobile telephone to become configured as a mobile telephone according to any of clauses 43 to 49.
84. Processor implementable instructions for configuring a programmable computer device to become configured as a transaction server according to any of clauses 31 to 42.
85. Processor implementable instructions for configuring a mobile telephone to become configured as a mobile telephone according to any of clauses 43 to 49.

## Claims

1. An electronic transaction system comprising : a merchant terminal associated with a merchant who provides goods or services and comprising :
i) first input means for receiving details of a transaction;
ii) second input means for receiving user identification data for a user associated with the transaction; and
iii) means for transmitting an authorisation request for the transaction, the request including said transaction details and said user identification data; and
a transaction server operable to receive the authorisation request and comprising:
i) means for storing, for each user, user account details associated with user identification data, the user account details comprising one or more mobile communications device numbers associated with the user;
ii) means for using the user identification data in the received authorisation request to retrieve a stored mobile communications device number for the user associated with the transaction from said stored user account details;
iii) means for transmitting a communication for authorisation of the transaction to the user's mobile communications device using the retrieved mobile communications device number;
iv) means for receiving authorisation for the transaction from the user; and
v) means for transmitting an authorisation signal for the transaction; and
wherein the merchant terminal further comprises:
iv) means for receiving the authorisation signal for the transaction; and
v) means for outputting an indication that the transaction has been authorised.

2. A system according to claim 1, wherein said authorisation request is a first authorisation request, wherein said stored user account details associated with the user identification data further comprises details of at least one credit or debit card associated with the user, wherein said transaction server further comprises:
vi) means for using the user identification data in the first authorisation request to retrieve the credit or debit card details for one of the user's credit or debit cards from said stored user account details;
vii) means for generating a second authorisation request using the transaction details from the first authorisation request and the retrieved credit or debit card details;
viii) means for transmitting the second authorisation request to cause the transaction to be made on said one of the user's credit or debit cards; and
ix) means for receiving an authorisation signal for the second authorisation request; and wherein said transaction server is operable to transmit said authorisation signal for the first authorisation request in dependence upon the received authorisation signal for the second authorisation request.

3. A system according to any preceding claim, wherein said mobile communications device comprises:
i) means for receiving a communication for authorisation of the transaction;
ii) means responsive to a received communication for authorisation to prompt the user to authorise the transaction;
iii) means for receiving the user's input authorisation; and
iv) means for transmitting an authorisation communication to the transaction server.

4. A system according to claim 3, wherein said communication for authorisation transmitted to the user's mobile communications device includes details of two or more of the user's credit or debit cards and wherein the user's mobile communications device further comprises:
v) means for prompting the user to select one of the credit or debit cards identified in the received communications request;
vi) means for receiving a user's credit or debit card selection; and
vii) means for transmitting data identifying the user's credit or debit card selection to the transaction server.

5. A system according to claim 4, wherein said user's mobile communications device further comprises:
viii) means for generating an authorisation communication, the authorisation communication including the transaction details, data indicative of the user's authorisation for the transaction and data identifying the user's selected credit or debit card; and wherein the user's mobile communications device is operable to transmit the generated authorisation communication to the transaction server.

6. A system according to any preceding claim, wherein said transaction server further comprises:
x) means for determining if the user's mobile communications device is connected to a mobile communications network;
xi) means for generating an offline authorisation code for the authorisation request if said determining means determines that the user's mobile communications device is not connected to said mobile communications network; and
xii) means for transmitting the offline authorisation code; and
wherein the merchant terminal further comprises:
viii) means for receiving said offline authorisation code;
ix) means for outputting said offline authorisation code to the user;
x) means for receiving a validation code for the transaction from the user; and
xi) means for transmitting the validation code for the transaction; and
wherein said transaction server further comprises:
xiii) means for receiving the validation code for the transaction; and
xiv) means for verifying that the received validation code is valid; and wherein said transaction server is operable to transmit said authorisation signal if said verifying means verifies that the received validation code is valid.

7. A system according to claim 6, wherein said transaction server is operable to transmit an authorisation failed signal if said verifying means does not verify the validation code.

8. A system according to claim 6 or 7, wherein said mobile communications device is operable to generate said validation code using said authorisation code output by said merchant terminal and data input by said user.

9. A system according to any preceding claim, wherein the transaction server further comprises:
xv) means for determining if a current user's mobile communications device is connected to the mobile communications network;
xvi) means for retrieving a second mobile communications device number for a user's second mobile communications device if said determining means determines that the mobile communications device is not connected to said mobile communications network; and
xvii) means for sending a second communication for authorisation of the transaction to the user's second mobile communications device using the retrieved second mobile communications number.

10. A transaction server for use in an electronic transaction system by one or more users, the server comprising :
i) means for storing, for the one or more users, user account details associated with user identification data, the user account details including one or more mobile communications device numbers associated with the user;
ii) means for receiving an authorisation request for a transaction between a merchant and a user, the authorisation request including details of the transaction and user identification data for the user associated with the transaction ;
iii) means for using the user identification data in the received authorisation request to retrieve the stored mobile communications device number for the user associated with the transaction from said stored user account details;
iv) means for transmitting a communication for authorisation of the transaction to the user's mobile communications device using the retrieved mobile communications device number;
v) means for receiving authorisation for the transaction from the user; and vi) means for transmitting an authorisation signal for the transaction.

11. A transaction server according to claim 10, wherein said authorisation request is a first authorisation request, wherein said stored user account details associated with the user identification data further comprises details of at least one credit or debit card associated with the user, wherein said transaction server further comprises : vii) means for using the user identification data in the first authorisation request to retrieve the credit or debit card details for one of the user's credit or debit cards from said stored user account details; viii) means for generating a second authorisation request using the transaction details from the first authorisation request and the retrieved credit or debit card details ; ix) means for transmitting the second authorisation request to cause the transaction to be made on said one of the user's credit or debit cards; and
x) means for receiving an authorisation signal for the second authorisation request; and wherein said transaction server is operable to transmit said authorisation signal for the first authorisation request in dependence upon the received authorisation signal for the second authorisation request.

12. A mobile telephone associated with a user, comprising :
i) means for receiving a communication for authorisation of a transaction, the communication including details of the transaction;
ii) means for outputting the transaction details in the received authorisation communication and for prompting the user to authorise the transaction details;
iii) means for receiving a user's input authorising or declining the transaction; and
iv) means for transmitting an authorisation communication in dependence upon the received user's input.

13. A mobile telephone according to claim 12, further comprising a software module having said receiving means, outputting means, input means and transmitting means, which software module is initiated upon receipt of said authorisation communication.

14. A mobile telephone according to claim 12, further comprising a web browser which is operable to connect to a remote transaction server in response to receiving said communication for authorisation from said transaction server.

15. A mobile telephone according to any of claims 12 to 14, wherein said received communication for authorisation includes details of two or more of the user's credit or debit cards and wherein the mobile telephone further comprises :
v) means for prompting the user to select one of the credit or debit cards;
vii) means for receiving-a user's credit or debit card selection ; and
viii) means for transmitting the user's credit or debit card selection.

16. A mobile telephone according to claim 15, further comprising:
ix) means for generating an authorisation communication, the authorisation communication including data identifying the transaction, data indicative of the user's authorisation for the transaction and data identifying the user's selected credit or debit card; and wherein the user's mobile communications device is operable to transmit the generated authorisation message to a remote transaction server.

17. A mobile telephone according to any of claims 12 to 16, further comprising:
ix) means for receiving an offline authorisation code;
x) means for generating a validation code using said received authorisation code and data input by said user; and
xi) means for outputting said generated validation code.

18. An electronic transaction method in a transaction system comprising a merchant terminal associated with a merchant who provides goods or services to a user and a transaction server which stores, for each user, user account details associated with user identification data, the user account details comprising one or more mobile communications device numbers associated with the user, the method comprising the steps of:
in the merchant terminal:
i) receiving details of a transaction between the associated merchant and the user;
ii) receiving user identification data for the user; and
iii) transmitting an authorisation request for the transaction, the request including said transaction details and said user identification data; and
in the transaction server:
i) receiving the authorisation request;
ii) using the user identification data in the received authorisation request to retrieve a stored mobile communications device number for the user associated with the transaction from the stored user account details;
iii) transmitting a communication for authorisation of the transaction to the user's mobile communications device using the retrieved mobile communications device number;
iv) receiving authorisation for the transaction from the user; and
v) transmitting an authorisation signal for the transaction ; and
wherein the method further comprises the steps of:
in the merchant terminal:
iv) receiving the authorisation signal for the transaction; and
v) outputting an indication that the transaction has been authorised.

19. A method according to claim 18, wherein said authorisation request is a first authorisation request, wherein said stored user account details associated with the user identification data further comprises details of at least one credit or debit card associated with the user, wherein the method further comprises the steps of, in said transaction server further:
vi) using the user identification data in the first authorisation request to retrieve the credit or debit card details for one of the user's credit or debit cards from said stored user account details;
vii) generating a second authorisation request using the transaction details from the first authorisation request and the retrieved credit or debit card details;
viii) transmitting the second authorisation request to cause the transaction to be made on said one of the user's credit or debit cards ; and
ix) receiving an authorisation signal for the second authorisation request; and wherein in said transaction server, said authorisation signal transmitting step comprises transmitting said authorisation signal for the first authorisation request in dependence upon the received authorisation signal for the second authorisation request.

20. A method according to claim 18 or 19, further comprising the steps of, in said mobile communications device:
i) receiving a communication for authorisation of the transaction;
ii) prompting the user to authorise the transaction in response to receiving a communication for authorisation;
iii) receiving the user's input authorisation; and
iv) transmitting an authorisation communication to the transaction server.

21. A method according to claim 20, wherein said communication for authorisation transmitted to the user's mobile communications device includes details of two or more of the user's credit or debit cards and wherein the method further comprises, in said user's mobile communications device:
v) prompting the user to select one of the credit or debit cards identified in the received communications request;
vi) receiving a user's credit or debit card selection; and
vii) transmitting data identifying the user's credit or debit card selection to the transaction server.

22. A method according to claim 21, further comprising the steps of, in said user's mobile communications device:
viii) generating an authorisation communication, the authorisation communication including the transaction details, data indicative of the user's authorisation for the transaction and data identifying the user's selected credit or debit card; and wherein said step of transmitting an authorisation signal in said user's mobile communications device comprises transmitting the generated authorisation communication to the transaction server.

23. A storage medium storing processor implementable instructions for configuring a programmable computer device to become configured as a transaction server according to claim 10 or 11.
